# EUROPEAN PATENT APPLICATION

(11) **EP 2 466 366 A1**
(43) Date of publication of application: **20.06.2012**
(21) Application number: 10808233.0
(22) Date of filing: 11.08.2010
(51) Int. Cl.: G02F 1/13357, F21S 2/00, G02B 1/04, F21Y 101/02

(54) **GEL MEMBER FOR OPTICAL USE, METHOD FOR ASSEMBLING OPTICAL DEVICE USING SAME, AND OPTICAL DEVICE**

(30) Priority: 13.08.2009 JP 2009187696; 30.04.2010 JP 2010104807
(71) Applicant: Taica Corporation, Minato-ku Tokyo 108-0074 (JP)
(72) Inventor: SAKURAI, Hirohisa, Shizuoka-shi Shizuoka 424-0911 (JP); SHIRATORI, Yuichi, Shizuoka-shi Shizuoka 424-0911 (JP); SASAZAWA, Takahiro, Shizuoka-shi Shizuoka 424-0911 (JP); MASUDA, Masahiko, Shizuoka-shi Shizuoka 424-0911 (JP)
(74) Representative: Müller-Boré & Partner Patentanwälte
(86) International application number: PCT/JP2010/063616
(87) International publication number: WO 2011/019050

(57) **Abstract**

An optical gel member to be used in a gap between light-emitting diode which is a backlight light source of an optical device and light guide plate, as well as an assembling method for an optical device and an optical device using the same.

The optical gel member etc. to be used in an interposed state between light guide plate and light-emitting device consisting of a light-emitting diode (LED) in an optical device, **characterized by** satisfying the following requirements (i) to (iii).
(i) The optical gel member consists of a transparent gel such as silicone type gel or acryl type gel, which has a hardness of 0 to 80 in JIS-A hardness according to JIS K6253, or 20 to 200 in penetration (25°C) in accordance with JIS K2207;
(ii) The optical gel member is in a string-like form, and the peripheral surface thereof is in contact with light guide plate and light-emitting device;
(iii) The optical gel member has a repulsive force of 12 MPa or less at a compression rate of 30%.

## Description

### TECHNICAL FILELD

The present invention relates to an optical gel member, an assembling method of optical device and an optical device using the same, in more detail, relates to an optical gel member to be used in a gap between light-emitting diode that serves as a light source of optical device such as liquid crystal display device or lighting equipment and light guide plate, as well as an assembling method of an optical device and an optical device using the same.

### BACKGROUND ART

Heretofore, an optical transmission technology combined a light-emitting device and a light guide plate guiding the light thereof has been used for a backlight light source in liquid crystal display device, and lighting equipment having a light-emitting unit where the backlight technology has been applied.
As the backlight light source of liquid crystal display device (hereinafter, also referred to as LCD), a cathode tube for medium to large screen such as television, personal computer and car navigation, and in particular, a light-emitting diode (hereinafter, also referred to as LED) for small-sized equipment such as cell-phone and game instrument have been employed until now.
In recent years, tendency of market needs to reduce environmental load is strong, and since mercury is used in fluorescent tube (cold-cathode tube), a demand that LED would be applied to backlight light source for the medium to large screen such as television where cathode tube (cold-cathode tube) had been used has been extremely heightened. If LED can be applied thereto, manufacturer side (and user side) can obtain a number of merits including improvement in performance and reduction of power consumption of LED, weight saving, durability and price reduction.
On the other hand, in the lighting equipment, along with the similar needs of reduced environmental load and recent enhancement in performance of LED, practical application of LED lighting system as an alternate of the fluorescent tube (hot-cathode tube) has been progressing. As for the LED lighting system, besides a structure illuminated directly by LED, a side-edge type LED lighting equipment where light of a light-emitting device is output in the plane direction of light guide plate by arranging the light-emitting device on the side face of the light guide plate, has been proposed and practically used. In particular, since the side-edge type has such merits that there is no uneven illumination (occurrence of spot) as seen in the direct illumination type because light is input from the side face and evenly output in the plane direction of light guide plate, and that the type has a high degree of freedom in designing because the light guide plate itself becomes a light source for illumination, use thereof has been expected to spread further, by further improvement in high brightness of LED in future.

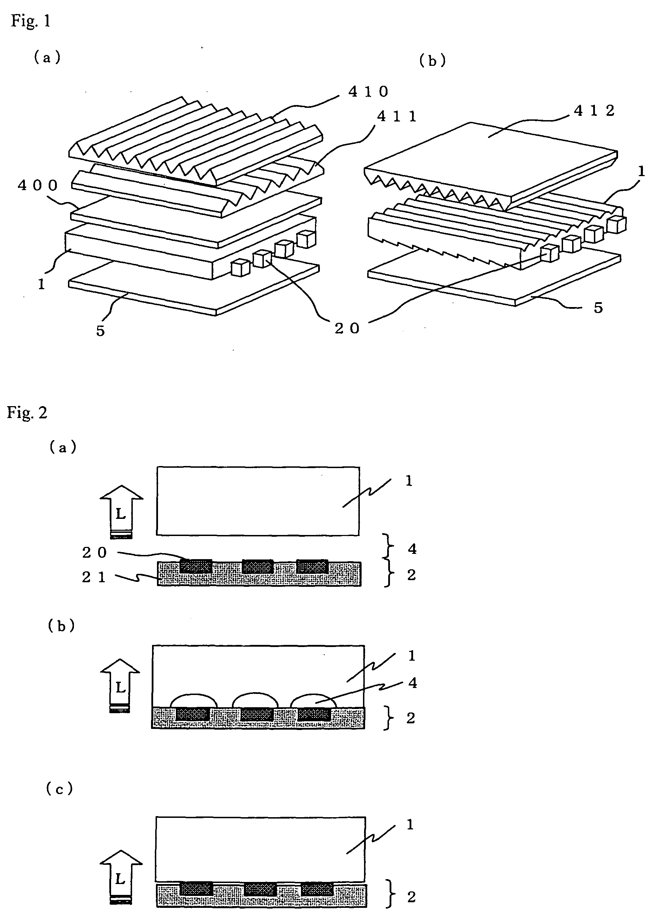

However, in replacing cathode tube with LED, it has been revealed that there are the following problems specific to LED to be solved which did not come to an issue previously.
That is, in application of LED, firstly (1) a technical problem that light incidence loss must be reduced is included, because the light incidence loss is generated by a gap (air gap) between LED and light guide plate.
This is because of the following reason. Since LED is a point light source unlike a cathode tube, and is a construction where a plurality of LEDs are mounted at a predetermined interval on a circuit substrate (for example, flexible substrate, glass-epoxy substrate, or the like) pointing light-emitting face in the direction of light guide plate, it is necessary to make incidence in more high efficiency from a light source unit (light source) having a light emission distribution, in which point light sources are scattered, to light guide plate.
For this reason, LED had been practically used by conventional methods such as (i) a method where light is injected efficiently into a light guide plate with the design maintaining forcibly the gap and distance thereof by forming an incident plane of light guide plate by cutting so that the incident plane has a shape corresponding to that of the light emission distribution and adjusting an incident angle (see, for example, Fig. 2, (a) and (b)); (ii) a method where the light guiding loss is reduced by butting a light-emitting face of LED and an incident plane (side-face of light guide plate) of light guide plate to minimize the gap as far as possible (see, for example, Fig. 2 (c)).
However, since the gap is present in any of the above-described methods, it had been considered that the light incidence loss by the gap is unavoidable in principle. In particular, in the above-described method (ii), although the design concept intends to minimize the clearance between LED and light guide plate by hitting each other, but occurrence of slight gap is unavoidable. Rather, since designing is made considering a dilation deformation of a light guide plate resin by heat from LED, a slight gap has become essential in design to avoid the dilation deformation. If there is no gap, it possibly becomes defective as backlight because warpage and deformation of a light guide plate are generated.

As a technique to improve or solve the above-described problem, a method where a transparent gel-like material is filled (injected) in the gap of LCD has been conventionally proposed (see, for example, Patent Literatures 1 to 3).
For example, Patent Literature 3 discloses a surface-emitting device having light guide plate and light source, **characterized in that** a light-emitting section of the light source is arranged in the side face of the light guide plate, and the light-emitting section and a light-entering section of the light guide plate are fixed eliminating air layer by a layer comprising at least one of optical system adhesive, optical system elastomer and optical system gel.
However, when a gel-like material is applied to the gap between LED and light guide plate, although the method is effective to reduce the light incidence loss, it has generated the following problems which need to be solved.
That is, the problem includes (2) when a gel-like material is filled, assembling has a difficult point in workability due to flowing out of the gel-like material; (3) along with high power of LED, an oil tends to bleed out from the gel-like material by heat; and the like. For these problems, application of the conventional optical adhesive is considered, but (4) the optical adhesive has a problem that re-work cannot be done in assembling optical components.
Consequently, an optical gel member, which is used for a gap between LED, which is, a light source of optical device such as liquid crystal display device and lighting equipment and a light guide plate, and which can solve the above-described problems (1) to (4) in a comprehensive way, has been demanded.

### CITATION LIST

### PATENT LITERATRE

Patent Literature 1: JP No. 3321718 (JP-A-6-337411);
Patent Literature 2: JP No. 4123355 (JP-A-2004-101636);
Patent Literature 3: JP-A-2005-078802.

### SUMMARY OF INVENTION

### TECHNICAL PROBLEM

In consideration of the above-described problems in the conventional technologies; it is an object of the present invention to provide an optical gel member to be used in a gap between light-emitting diode which is a light source of an optical device such as liquid crystal display device and lighting equipment and light guide plate, as well as an assembling method for an optical device and an optical device using the same.

### SOLUTION TO PROBLEM

The present inventors have intensively studied to solve the above-described problem, as a result, have found that by using a string-like transparent gel member (also referred to as string-like gel member) as an optical gel member, and employing a structure where said string-like transparent gel member is deformed by compression and placed between light-emitting face and incident plane, an light incidence loss from LED can be reduced, and workability in assembling by flowing out of the gel-like material can be improved, that is, the problems (1) and (2) can be solved; in addition, by providing tackiness to said string-like transparent gel member, workability in assembling can be improved, and securing adhesion in incorporation as well as compatibility of adhesion and rework become possible, that is, the method can contribute to solve the problems (2) and (4); and further by applying a specified material having a heat resistance and a low oil bleeding property as said string-like transparent gel member, oil bleeding can be inhibited, that is, the problem (3) can be solved; in other word, by using a string-like transparent gel member which is a specified material having a tackiness and/or heat resistance and a low oil bleeding property as an optical gel member, the above-described problems can be solved. The present invention was completed based on this knowledge.

That is, according to the first aspect of the present invention, there is provided an optical gel member to be used in an interposed state between light guide plate and light-emitting device consisting of a light-emitting diode (LED) in an optical device, characterized by satisfying the following requirements (i) to (iii).
(i) The optical gel member consists of at least one kind selected from silicone type gel, acryl type gel, polyolefin type gel, polyurethane type gel, butadiene gel, isoprene gel, butyl gel, styrene-butadiene gel, ethylene-vinyl acetate copolymer gel, ethylene-propylene-diene ternary copolymer gel and fluorine gel, which has a hardness of 0 to 80 in JIS-A hardness according to JIS K6253, or 20 to 200 in penetration (25°C) according to JIS K2207;
(ii) The optical gel member is in a string-like form, and the peripheral surface string-like gel member is in contact with light guide plate and light-emitting device;
(iii) The optical gel member has a repulsive force of 12 MPa or less at a compression rate of 30%.

According to the second aspect of the present invention, in the first aspect, there is provided the optical gel member, **characterized in that** at least one of faces in contact with light guide plate and light-emitting device of the peripheral surface of the string-like gel member has been set to have a convexly curved surface before the contact, and is compressed in a gap between light guide plate and light-emitting device to deform along with the surface form of a light incident surface of the light guide plate and/or a light-emitting face of the light-emitting device with no gap after the contact.
In addition, according to the third aspect of the present invention, in the first aspect, there is provided the optical gel member, **characterized in that** cross-sectional shape of the string-like gel member is an ellipsoidal shape with flattened top and bottom.
Further, according to the fourth aspect of the present invention, in the first aspect, there is provided the optical gel member, **characterized in that** cross-sectional shape of at least a part of the string-like gel member is U-shaped or L-shaped.

According to the fifth aspect of the present invention, there is provided the optical gel member in the first aspect, characterized by having a tackiness of ball No. 5 to 32 in the tilt type ball tack test (tilt angle: 30 degrees) in accordance with JIS Z0237.
In addition, according to the sixth aspect of the present invention, in the first aspect, there is provided the optical gel member, **characterized in that** as for the hardness, the hardness in the light-emitting device side of the gel member is softer than that of the light guide plate side.
Further, according to the seventh aspect of the present invention, in the first aspect, there is provided the optical gel member, **characterized in that** a diffusing agent has been dispersed at least in a part of the surface layer and/or the internal part of the optical gel member.

According to the eighth aspect of the present invention, in the first aspect, there is provided the optical gel member, **characterized in that** the string-like gel member has a different light transmittance in the peripheral surface and in the end face, and a light transmittance in the end face is 90% or less relative to that in the peripheral surface.
In addition, according to the ninth aspect of the present invention, in the first aspect, there is provided the optical gel member, **characterized in that** the transparent gel is a silicone gel, and said silicone gel is a branched type silicone gel obtained by heat-curing a composition containing (A) branched type organopolysiloxane, (B) organohydrogenpolysiloxane and (C) addition reaction catalyst.
Further, according to the tenth aspect of the present invention, in the first aspect, there is provided the optical gel member, **characterized in that** the transparent gel is a polyolefin type gel, and said polyolefin type gel has a tensile elongation rate (in accordance with JIS K6251) of 50% or more.

In addition, according to the eleventh aspect of the present invention, in the first aspect, there is provided the optical gel member, **characterized in that** a transparent liquid (a) has been coated on the surface of the transparent gel.
Further, according to the twelfth aspect of the present invention, in the first aspect, there is provided the optical gel member, **characterized in that** the optical device is a liquid crystal display device or a lighting equipment.

In addition, according to the thirteenth aspect of the present invention, there is provided an optical component having a constitution in which the optical gel member relevant to any one of the first to twelfth aspects has been adhered tightly at a predetermined position of a light guide plate or a reflection sheet in advance.
Further, according to the fourteenth aspect of the present invention, there is provided a laminated product of the optical gel member obtained by laminating at least a part of the peripheral surface of the optical gel member relevant to any one of the first to twelfth aspects at a predetermined position of a release film in a peelable state in advance.

On the other hand, according to the fifteenth aspect of the present invention, there is provided an assembling method for an optical device, characterized by pinching the optical gel member relevant to any one of the first to twelfth aspects with light guide plate of an optical device and light-emitting device consisting of a light-emitting diode (LED) to fix said optical gel member by compression.
In addition, according to the sixteenth aspect of the present invention, there is provided an assembling method for an optical device, characterized by pinching the optical gel member peeled release film from the laminated product of the optical gel member relevant to the fourteenth aspect with light guide plate of an optical device and light-emitting device consisting of a light-emitting diode (LED) to fix said laminated product.

In addition, according to the seventeenth aspect of the present invention, there is provided an assembling method for an optical device, characterized by pushing-in and inserting the optical gel member relevant to any one of the first to twelfth aspects into a gap between light incident surface of light guide plate and light-emitting face of light-emitting device consisting of a light-emitting diode (LED) in an optical device which has been assembled up already, to connect said light incident surface of light guide plate and said light-emitting face of light-emitting device through the optical gel member.
Further, according to the eighteenth aspect of the present invention, there is provided an assembling method for an optical device, characterized by inserting the optical gel member relevant to any one of the first to twelfth aspects into a gap between the light incident surface of a light guide plate and the light-emitting face of a light-emitting device consisting of a light-emitting diode (LED) in an optical device which has been assembled up already in a state where diameter of the string-like gel member has been made finer by stretching said optical gel member in the longitudinal direction in advance, subsequently releasing the stretching of said optical gel member and restoring the original shape, to connect the light incident surface of said light guide plate and the light-emitting face of said light-emitting device through the optical gel member.

In addition, according to the nineteenth aspect of the present invention, there is provided a method for producing the optical gel member relevant to any one of the first to twelfth aspects, **characterized in that** a raw material of the optical gel member is subjected to extrusion molding.

According to the twentieth aspect of the present invention, there is provided an optical device, characterized by using the optical gel member relevant to any one of the first to twelfth aspects.
In addition, according to the twenty-first aspect of the present invention, in the twentieth aspect, there is provided the optical device, **characterized in that**: the optical gel member relevant to any one of the first to twelfth aspects is interposed between light incident surface of light guide plate and light-emitting face of light-emitting device consisting of a light-emitting diode (LED) in an optical device; and further transparent liquid (b) is interposed between the optical gel member and light-emitting device consisting of the light-emitting diode (LED).
Further, according to the twenty-second aspect of the present invention, in the twentieth aspect, there is provided the optical device, **characterized in that**: the optical gel member relevant to any one of the first to twelfth aspects is interposed state between light incident surface of light guide plate and light-emitting face of light-emitting device consisting of a light-emitting diode (LED) in an optical device; and further an insulating spacer is arranged in a gap between light-emitting devices consisting of a light-emitting diode (LED).

According to the twenty-third aspect of the present invention, in the twenty-second aspect, there is provided the optical device, **characterized in that** the spacer has a reflection layer in the optical gel member side thereof.
In addition, according to the twenty-fourth aspect of the present invention, in the twenty-second aspect, there is provided the optical device, **characterized in that** the spacer is a thermally-conductive material.
Further, according to the twenty-fifth aspect of the present invention, in the twentieth aspect, there is provided the optical device, **characterized in that** the light-emitting diode (LED) has a structure movable in a backward and forward direction perpendicular to a light-emitting face thereof.
Still further, according to the twenty-sixth aspect of the present invention, there is provided an electronic device, characterized by mounting the optical device relevant to any one of the twentieth to twenty-fifth aspect.

As described above, the present invention relates to an optical gel member and the like, and preferable aspects thereof include the following:
(1) the optical gel member in the fifth aspect, **characterized in that** the tackiness is higher in the LED side of the optical gel member than in the light guide plate side of the optical gel member; and
(2) the optical gel member in the first aspect, **characterized in that** the hardness is harder in the internal part of gel member than that of the surface part in the light guide plate side and the light-emitting device side.

### ADVANTAGEOUS EFFECTS OF INVENTION

The optical gel member of the present invention is used in an interposed state between light guide plate and light-emitting device consisting of light-emitting diode (LED) in an optical device such as liquid crystal display device and lighting equipment, to take a remarkable effect that the optical gel member can reduce a light incidence loss from LED. In addition, since a permeability of blue light is increased, expression of more natural color tone than the conventional yellow-tinged display becomes possible.
And, according to the present invention, since the light emitted from LED can be efficiently used, evaluation of brightness is improved by 15% or more compared to that for the conventional device, and hence an optical device such as liquid crystal display device and lighting equipment showing correspondingly low power consumption can be provided. In addition, due to the reduced light incidence loss, reduction of LED from 4 units to 3 units becomes possible allowing a cost down corresponding to 1 unit of LED, and hence optical device such as inexpensive liquid crystal display device and lighting equipment can be provided.
Furthermore, according to the present invention, by incorporating a spacer among the separately-placed LEDs, easiness of incorporating work for an optical gel member and adhesion stability after incorporation are secured. In addition, by enhanced life-spun of LED due to thermolytic action by providing thermal conductivity to the spacer, as well as brightness improvement action due to reduction of light leakage by providing a reflection layer in abutting side of an optical gel, further quality improvement and cost down become possible.

### BRIEF DESCRIPTION OF THE DRAWINGS

[Fig. 1]
   Fig. 1 is a schematic diagram illustrating a backlight structure of conventional LCD.
[Fig. 2]
   Fig. 2 is a schematic diagram of an incorporating embodiment of conventional LED and light guide plate.
[Fig. 3]

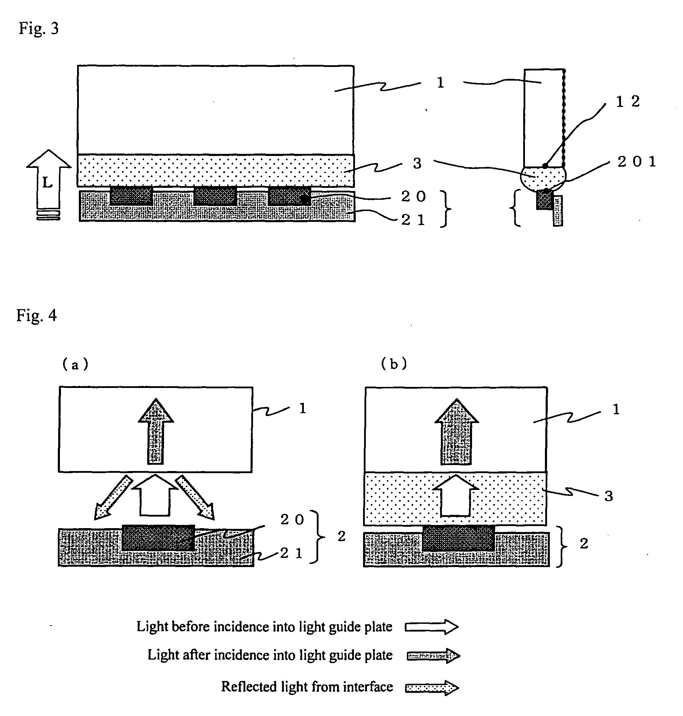

   Fig. 3 is a schematic diagram by a front view (left side figure) and a side view (right side figure) illustrating the backlight structure incorporated with the optical gel member of the present invention.
[Fig. 4]
   Fig. 4 is a schematic diagram illustrating an optical transmission effect in the case where the optical gel member of the present invention is applied.
[Fig. 5]

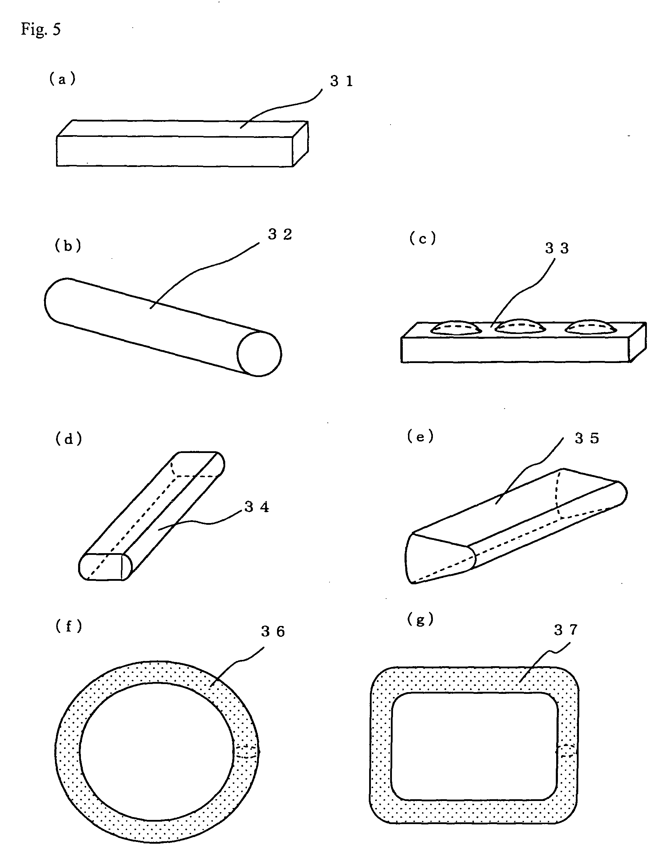

   Fig. 5 is a schematic diagram showing shape examples of the optical gel member of the present invention.
[Fig. 6]

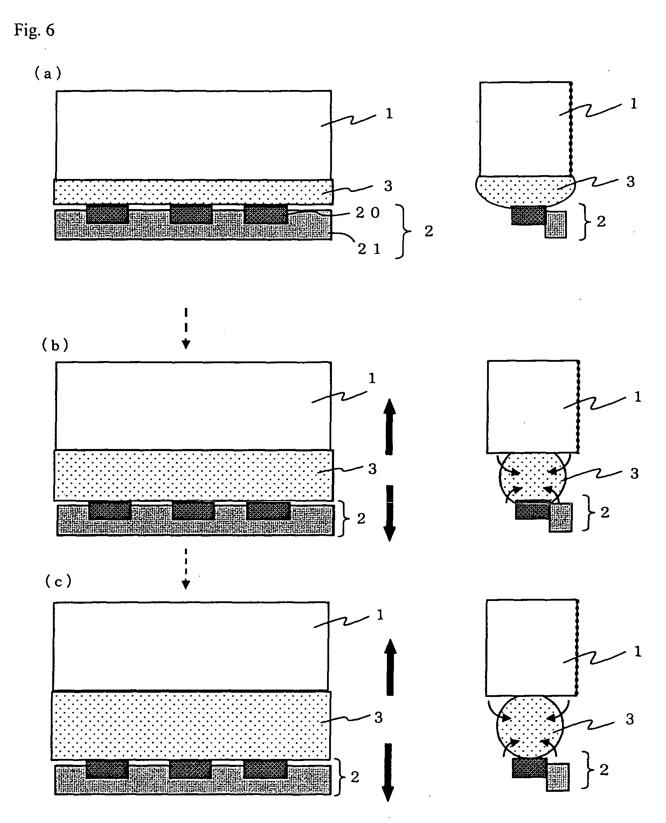

   Fig. 6 is a schematic diagram by a front view (left side figure) and a side view (right side view) illustrating depressurization shape-restoration behavior of the optical gel member having a convexly curved peripheral surface of the present invention.
[Fig. 7]
   Fig. 7 is a schematic diagram by a front view (left side figure) and a side view (right side view) showing an example of optical component where the optical gel member of the present invention and a light guide plate have been integrated.
[Fug. 8]
   Fig.8 is a schematic diagram by a front view (left side figure) and a side view (right side view) showing an example of optical component where the optical gel member of the present invention and a reflection sheet have been integrated.
[Fig. 9]

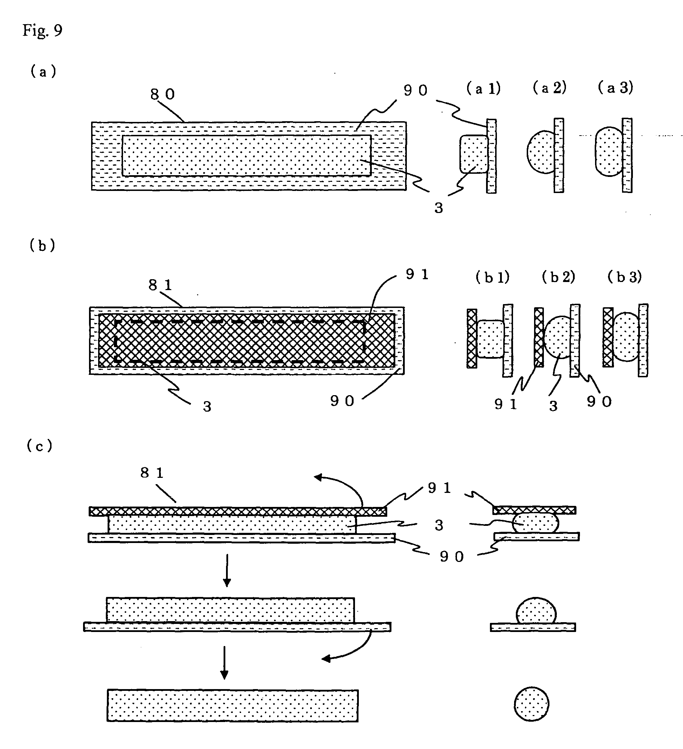

   Fig. 9 is a schematic diagram by a front view (left side figure) and a side view (right side figure) illustrating examples ((a), (b)) of a laminated product of an optical gel member where the optical gel member of the present invention and a release film have been laminated, and shape-restoration behavior of the optical gel member when the release film is removed.
[Fig. 10]

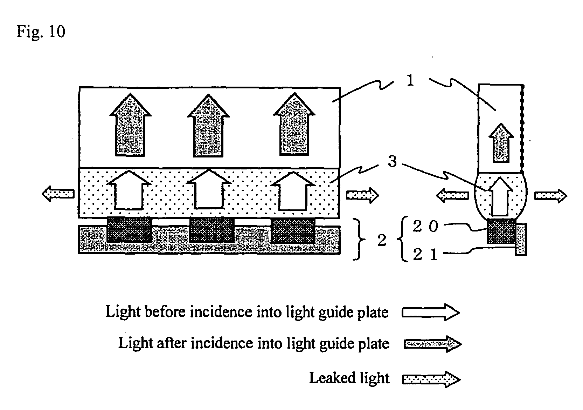

   Fig. 10 is a schematic diagram by a front view (left side figure) and a side view (right side figure) illustrating generation of the light leakage from the optical gel member of the present invention.
[Fig.11]

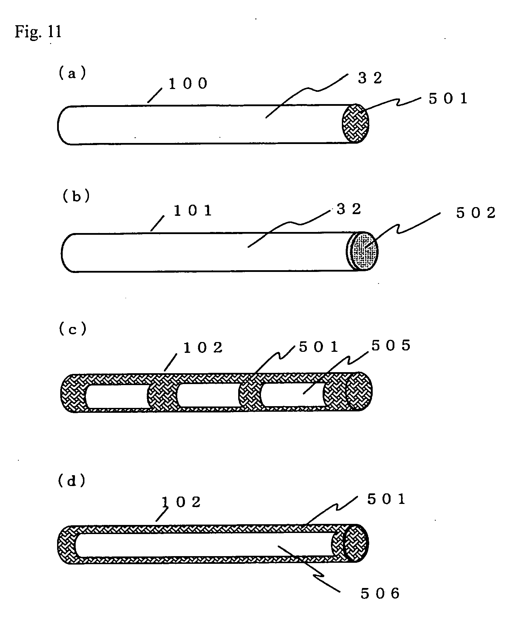

   Fig. 11 is a schematic diagram showing an example of embodiment where the optical gel member of the present invention has been subjected to low light transmission treatment.
[Fig. 12]

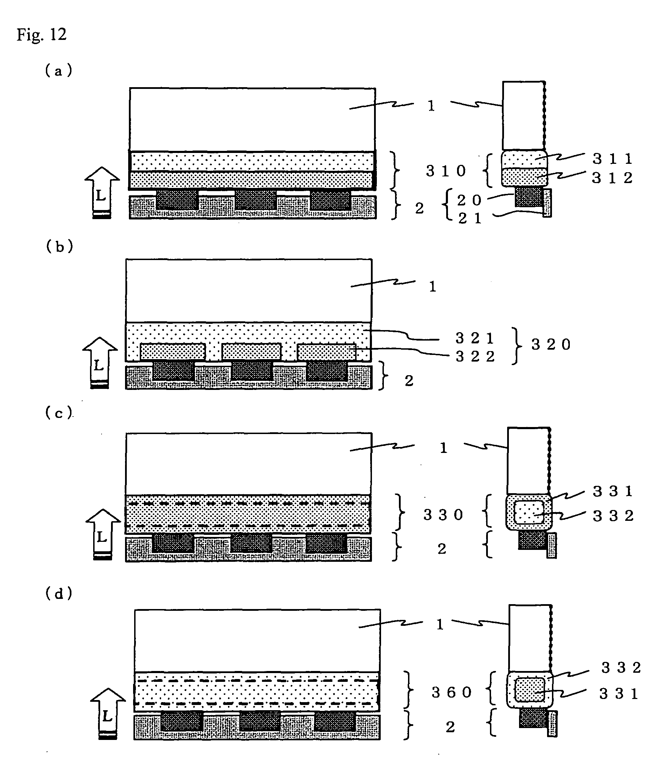

   Fig. 12 is a schematic diagram by a front view (left side figure) and a side view (right side figure) illustrating an embodiment of the optical gel member composed of parts having different hardness of the present invention.
[Fig. 13]

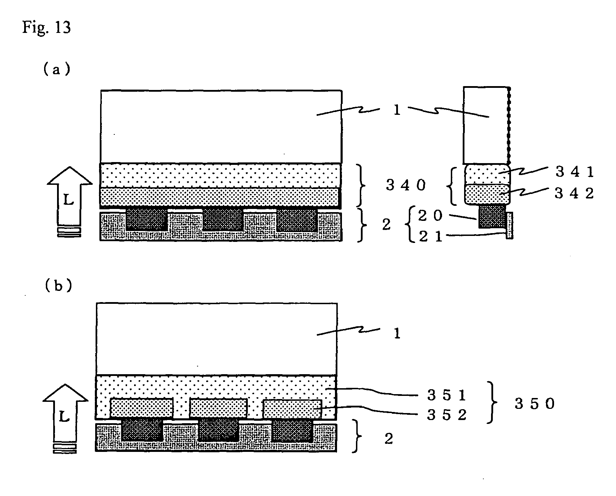

   Fig. 13 is a schematic diagram by a front view (left side figure) and a side view (right side figure) illustrating an embodiment of the optical gel member having faces with different tackiness of the present invention.
[Fig. 14]

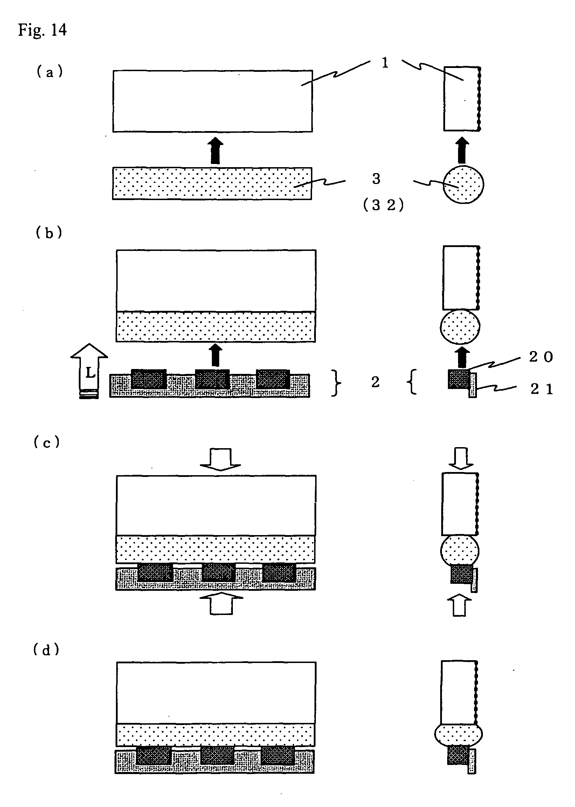

   Fig. 14 is a schematic diagram by a front view (left side figure) and a side view (right side figure) showing an embodiment of the method where the optical gel member of the present invention is placed between a LED and a light guide plate.
[Fig. 15]

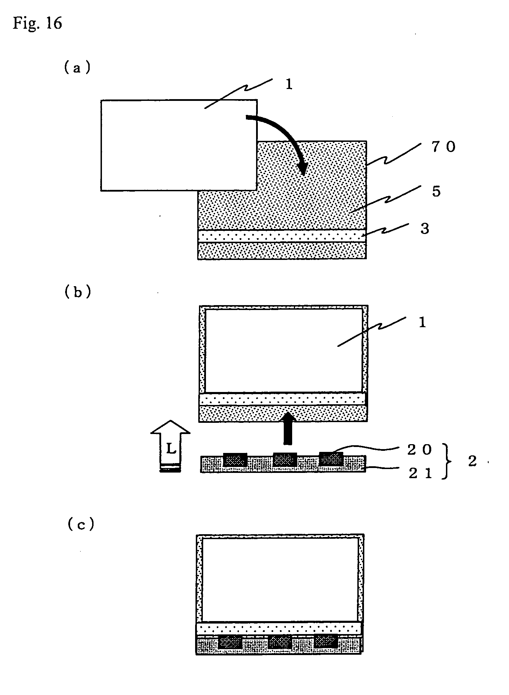

   Fig. 16 is a schematic diagram showing another embodiment of the method where the optical gel member of the present invention is placed between a LED and a light guide plate.
[Fig. 16]
   Fig. 16 is a schematic diagram showing an example of the method where the optical gel member of the present invention is placed between a LED and a light guide plate using an optical component where the optical gel member of the present invention and a reflection sheet have been integrated.
[Fig 17]

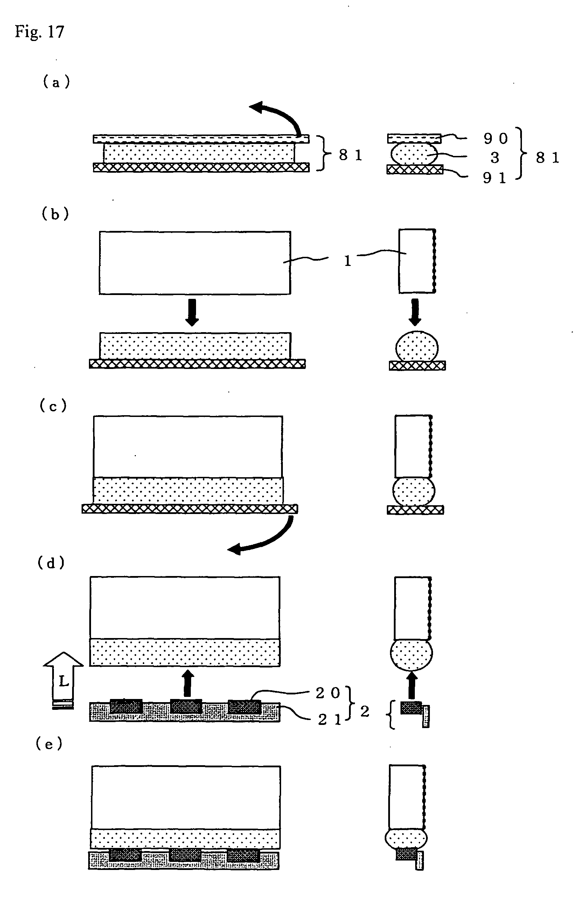

   Fig. 17 is a schematic diagram by a front view (left side figure) and a side view (right side figure) showing an example of the method where the optical gel member is placed between a LED and a light guide plate.
[Fig. 18]

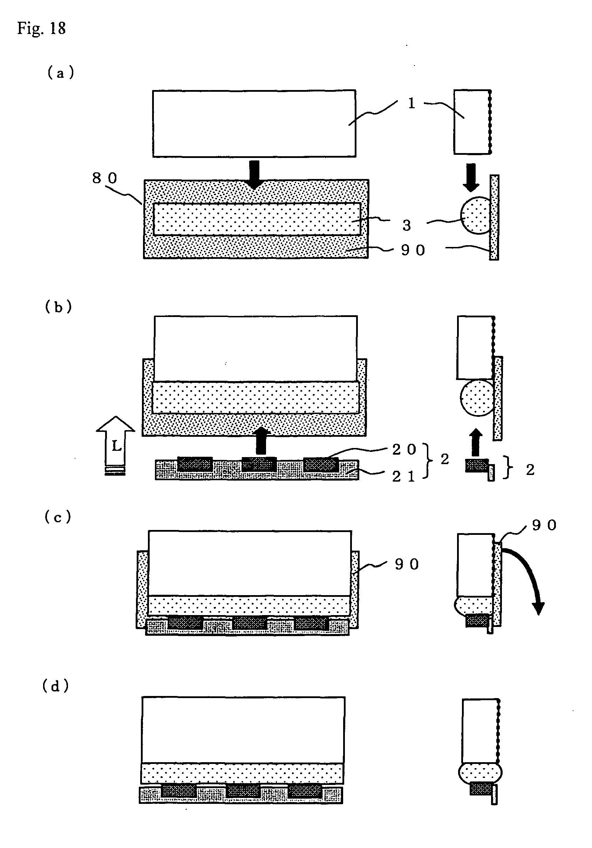

   Fig. 18 is a schematic diagram by a front view (left side figure) and a side view (right side figure) showing another embodiment of the method where the optical gel member is placed between a LED and a light guide plate.
[Fig. 19]

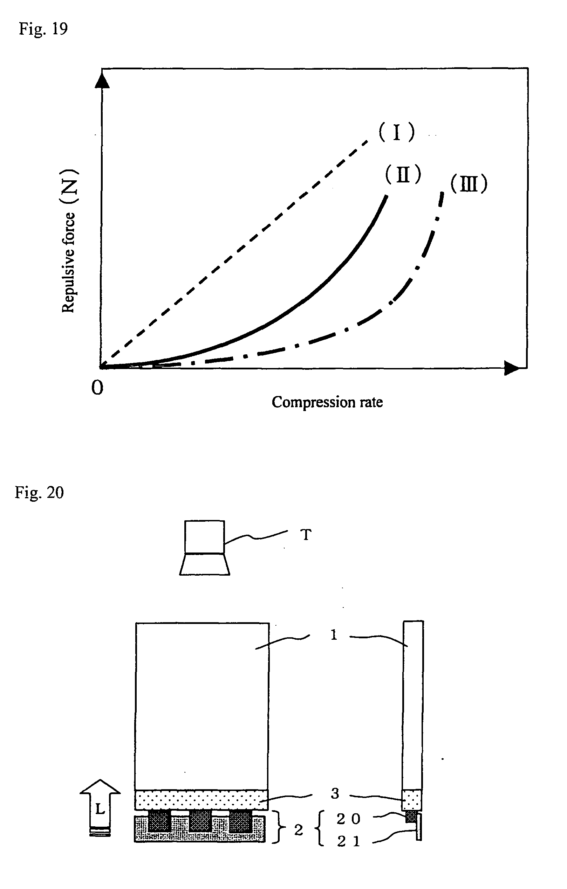

   Fig. 19 is a schematic diagram illustrating the relationship between compression rate and repulsive force in the optical gel member of the present invention.
[Fig. 20]
   Fig. 20 is a schematic diagram showing simplified evaluation equipment in Example of the present invention.
[Fig. 21]

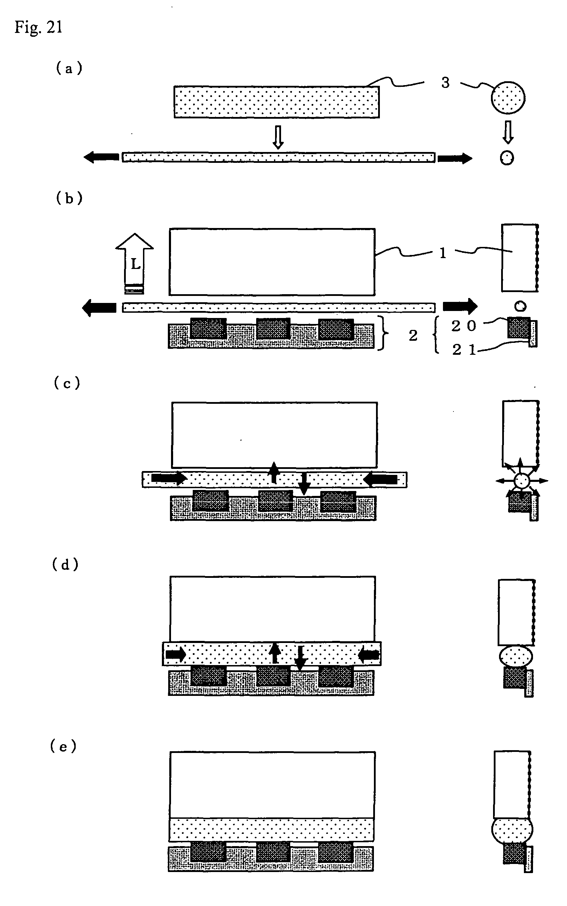

   Fig. 21 is a schematic diagram by a front view (left side figure) and a side view (right side figure) showing another embodiment of the method for incorporating the optical gel member of the present invention.
[Fig. 22]

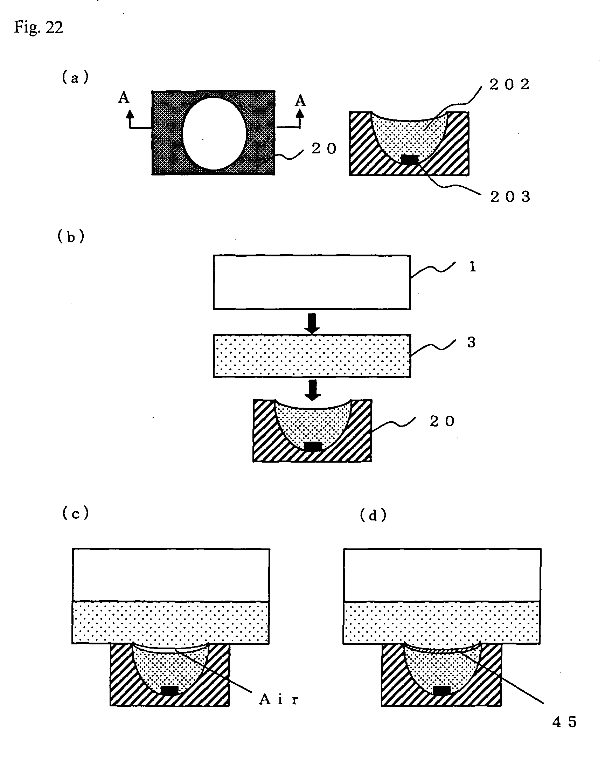

   Fig. 22 is a schematic diagram illustrating an embodiment of the twentieth aspect of the present invention, and (b), (c) and (d) are schematic diagrams of (a) in the A-A cross-sectional direction.
[Fig. 23]

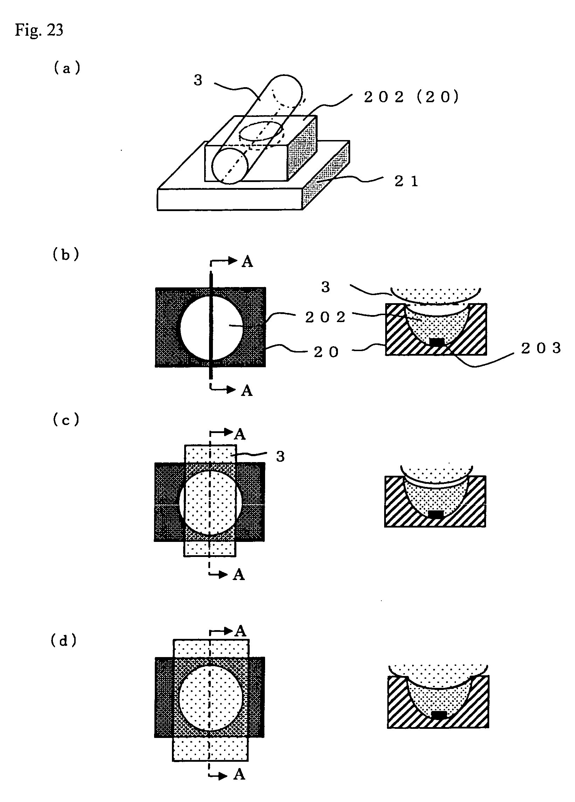

   Fig. 23 is a schematic diagram illustrating an adhesion behavior of the optical gel member of the present invention to a concave surface of LED, and (b), (c) and (d) are top view diagrams of (a) and A-A cross-sectional diagrams thereof.
[Fig. 24]

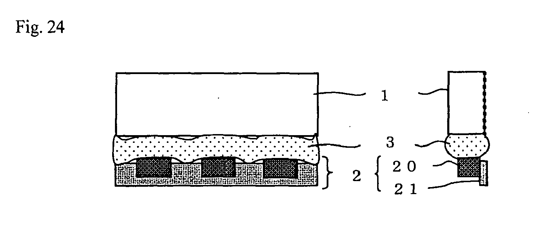

   Fig. 24 is a schematic diagram by a front view (left side figure) and a side view (right side figure) illustrating an unfavorable deformation action of the optical gel member of the present invention.
[Fig. 25]

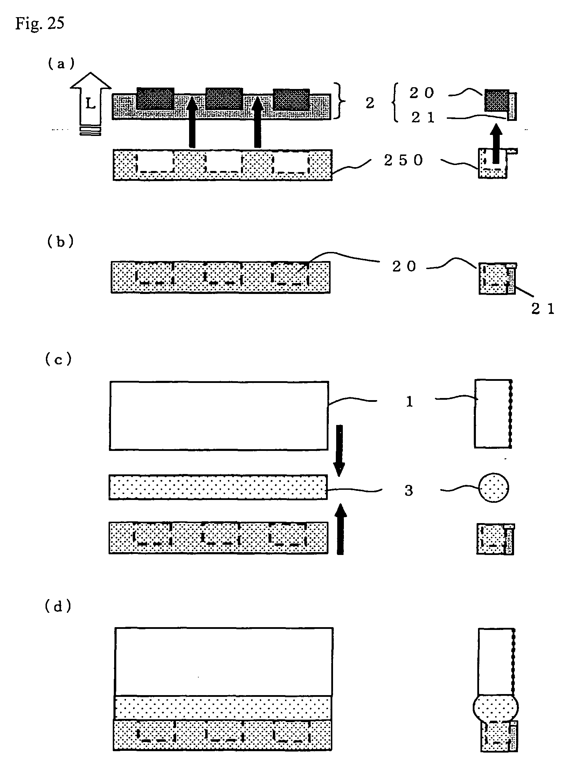

   Fig. 25 is a schematic diagram by a front view (left side figure) and a side view (right side figure) illustrating an embodiment of the twenty-second aspect of the present invention.
[Fig. 26]

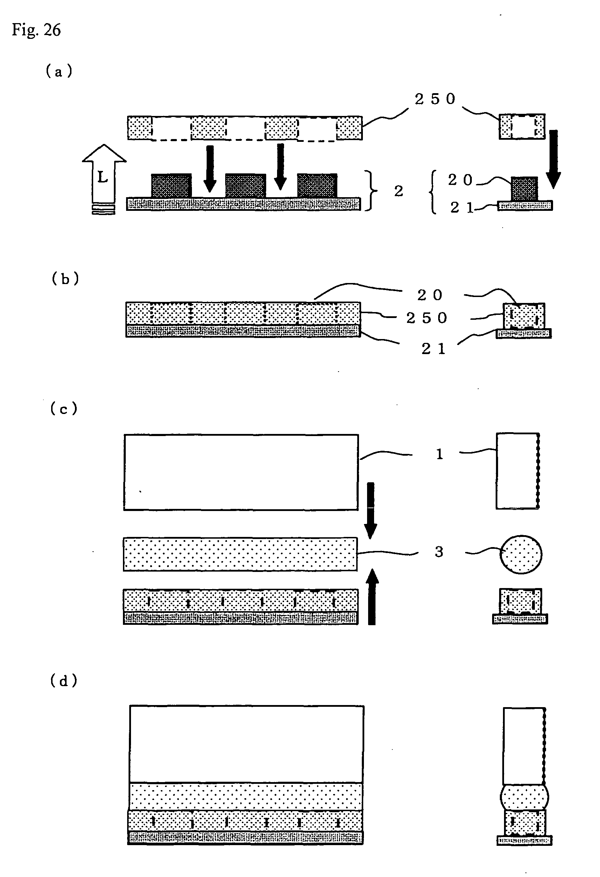

   Fig. 26 is a schematic diagram by a front view (left side figure) and a side view (right side figure) illustrating another embodiment of the twenty-second aspect of the present invention.
[Fig. 27]

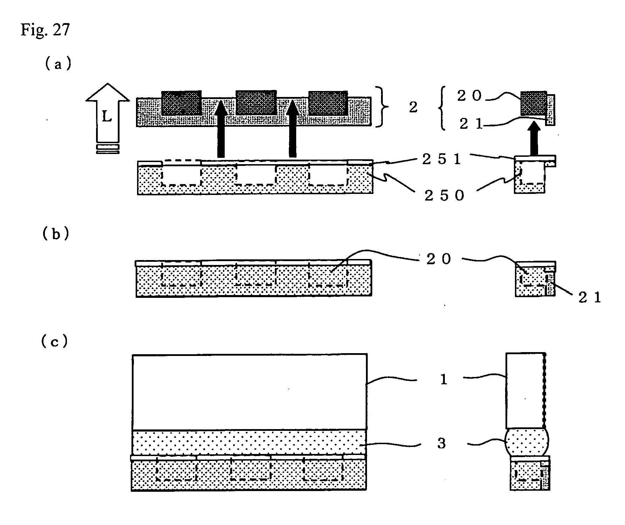

   Fig. 27 is a schematic diagram by a front view (left side figure) and a side view (right side figure) illustrating an embodiment of the twenty-third aspect of the present invention.
[Fig. 28]

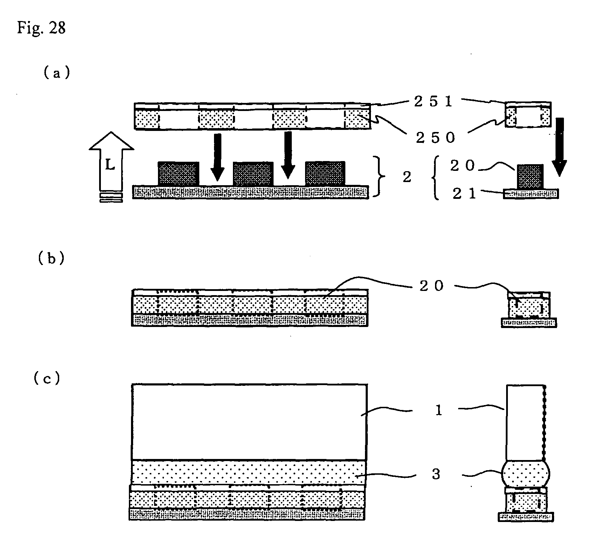

   Fig. 28 is a schematic diagram by a front view (left side figure) and a side view (right side figure) illustrating another embodiment of the twenty-third aspect of the present invention.
[Fig. 29]

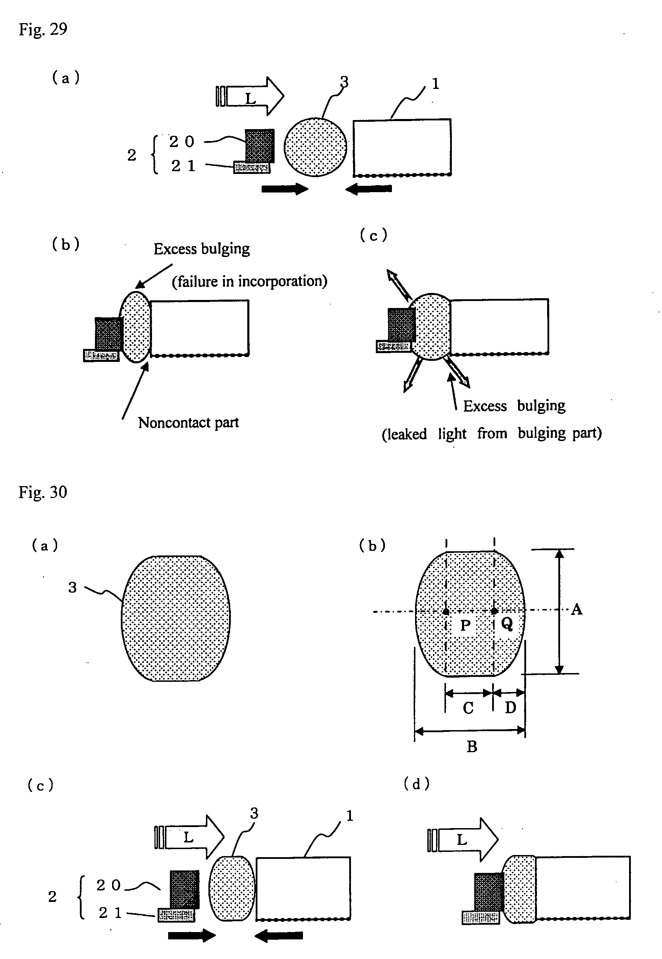

   Fig. 29 is a schematic diagram illustrating an unfavorable embodiment in the method for placing in-between the optical gel member of the present invention.
[Fig. 30]
   Fig. 30 is a schematic diagram illustrating preferable embodiment of the optical gel member of the present invention.
[Fig. 31]

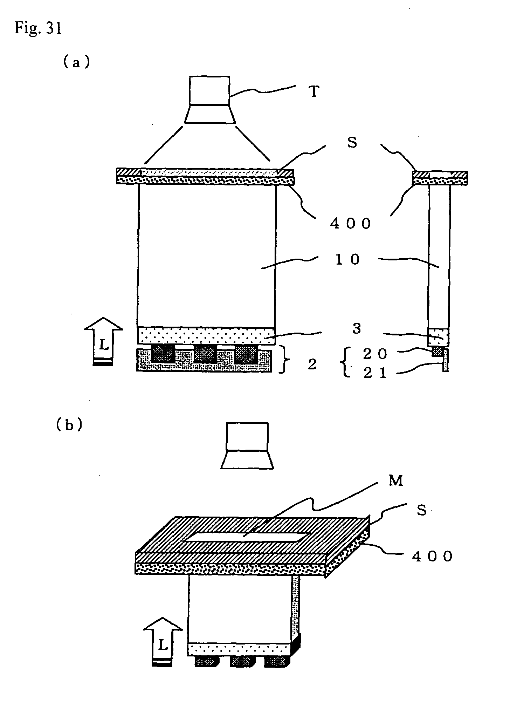

   Fig. 31 is a schematic diagram showing an evaluation equipment in Example of the present invention.
[Fig. 32]

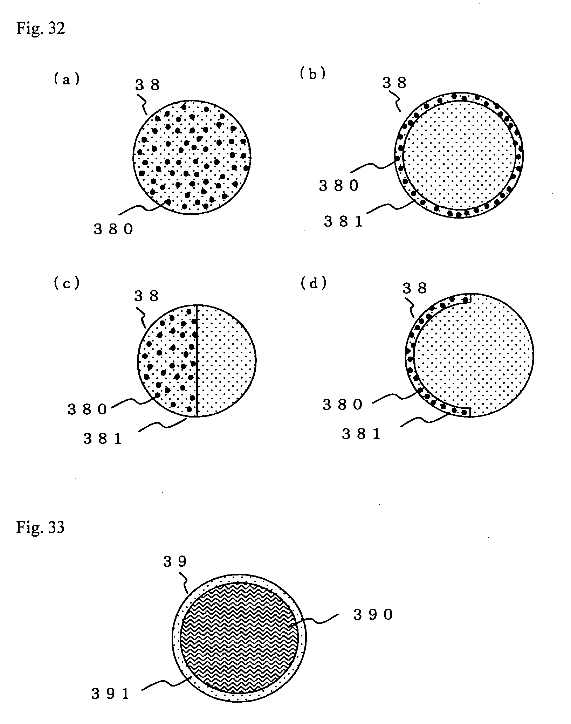

   Fig. 32 is a schematic diagram of a cross-section of the optical gel member illustrating an embodiment of the sixth aspect of the present invention.
[Fig. 33]
   Fig. 33 is a schematic diagram of a cross-section of the optical gel member illustrating another embodiment of the optical gel member of the present invention.
[Fig. 34]

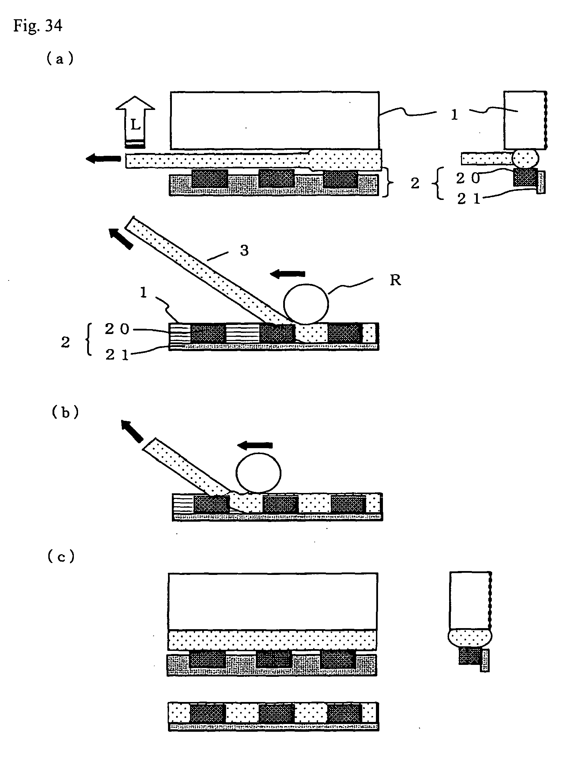

   Fig. 34 is a schematic diagram by a front view (left side figure) and side views from 2 directions (right side figure and lower side figure) illustrating another embodiment of the twentieth aspect of the present invention.
[Fig. 35]

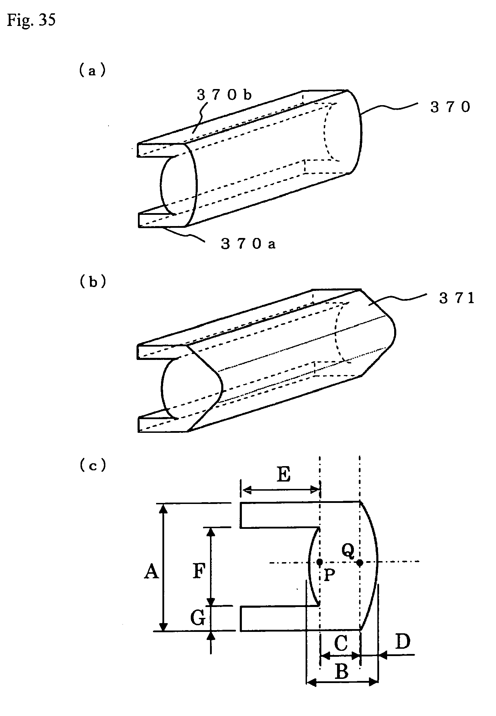

   Fig. 35 is a schematic diagram illustrating an embodiment of the fourth aspect of the present invention.
[Fig. 36]

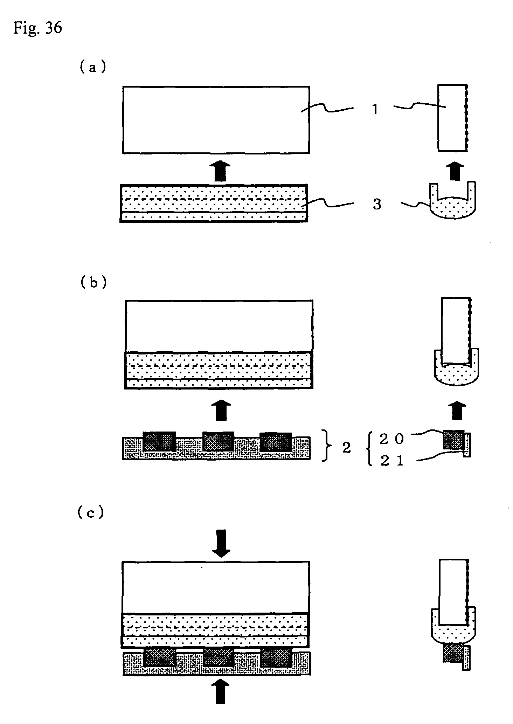

   Fig. 36 is a schematic diagram by a front view (left side figure) and a side view (right side figure) illustrating an embodiment of the fourth aspect of the present invention.
[Fig. 37]

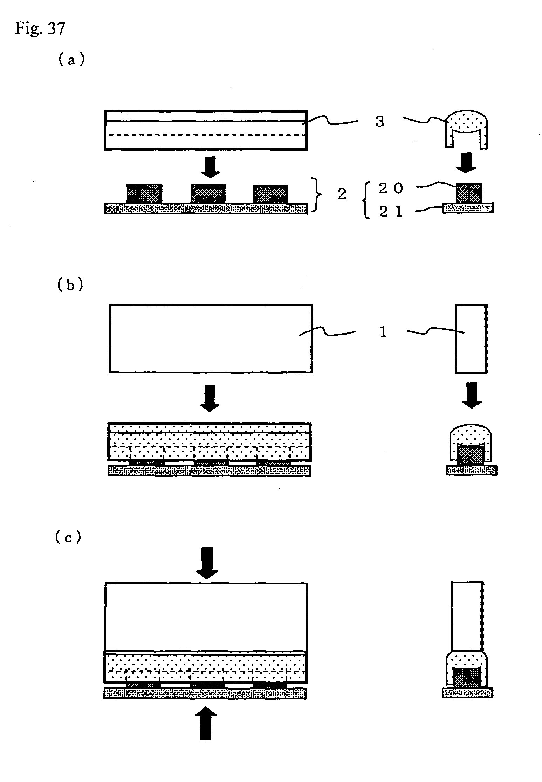

   Fig. 37 is a schematic diagram by a front view (left side figure) and a side view (right side figure) illustrating another embodiment of the fourth aspect of the present invention.
[Fig. 38]

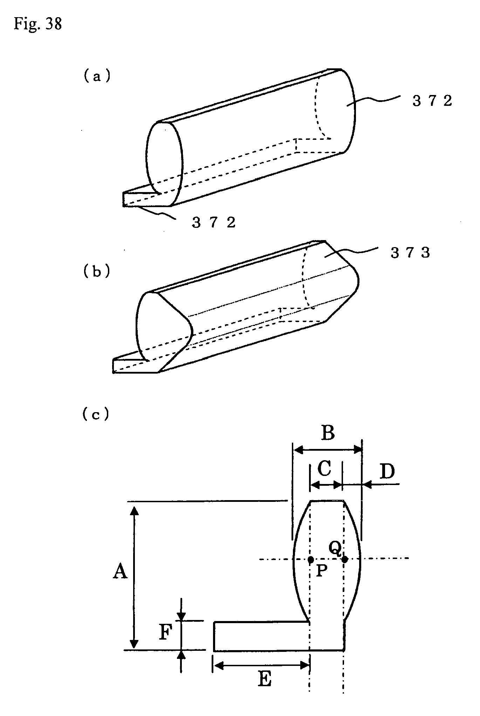

   Fig. 38 is a schematic diagram illustrating another embodiment of the fourth aspect of the present invention.
[Fig. 39]

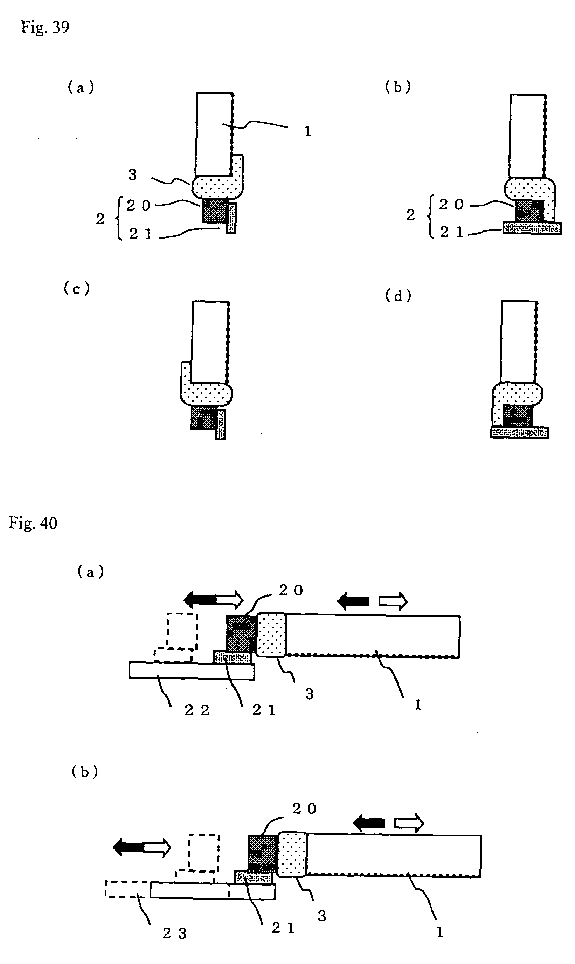

   Fig. 39 is a schematic diagram illustrating another embodiment of the fourth aspect of the present invention.
[Fig. 40]
   Fig. 40 is a schematic diagram illustrating an embodiment of the twenty-fifth aspect of the present invention.
[Fig. 41]

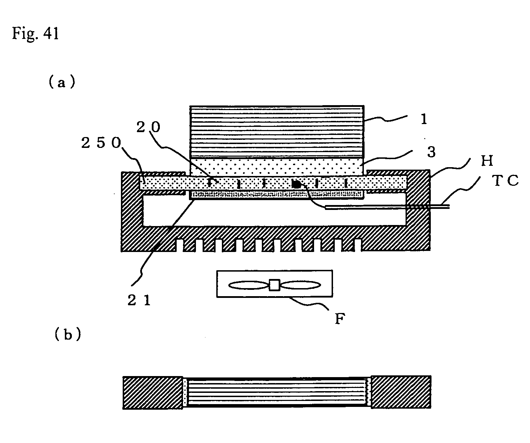

   Fig. 41 (a) is a schematic diagram illustrating a heat releasing structure and a method for measuring temperature of LED in Example of the present invention, and (b) is a top view thereof.

### DESCRIPTION OF EMBODIMENTS

The optical gel member of the present invention is used in an interposed state between light guide plate and light-emitting device consisting of a light-emitting diode (LED) in an optical device such as liquid crystal display device and lighting equipment. Hereinafter, explanation is made item by item.
It should be noted that the optical device in the present invention includes also an optical component which comprises a combination of LED (light-emitting device) and light guide plate as a minimum constitution.

### 1. Shape of the optical gel member

The optical gel member of the present invention is used by incorporating in a gap between LED and light guide plate in an optical device such as liquid crystal display device and lighting equipment, and a string-like shape is an essential requirement. The optical gel member of the present invention is tightly adhered to LED and light guide plate by bringing the outer peripheral surface of the string-like transparent gel member (hereinafter, also referred to as string-like gel member) into contact with light guide plate and light-emitting device, and deforming by pressure if necessary.
Here, "string-like" means a state where the member has a predetermined length, polygonal or circular cross-section, and freely bendable in the longitudinal direction, and includes thread-like shape having a small thickness (diameter), and also the one having extremely short length (around one LED unit) and ring-shaped one (see, for example, Fig. 5 (f) and (g)). It should be noted that, the "cross-section" used herein means the cross-section when the string-like gel member is cut vertically to the central axis of the member in the longitudinal direction (corresponds to the cross-section in radial direction in the case of cylinder) (hereinafter, same as above unless otherwise noted).
As for both contacting faces of outer peripheral surface of the string-like gel member with light guide plate and light-emitting device, desirably at least a part thereof has a convexly curved surface before contacting as shown in Fig. 5, (b) to (e), and more preferably both contacting faces have convexly curved surfaces, from the following reason. And, said convexly curved surface deforms along with a surface shape of light incident surface of the light guide plate and/or light-emitting face of the light-emitting device by being compressed into a gap between the light guide plate and the light-emitting device after contacting.
The "convexly curved surface" used herein means a curved surface which is formed as a trajectory when a shape of outer circumference in contacting side with light-emitting face of LED or light incident surface of light guide plate is convexly curved line in the cross-section in radial direction of the string-like gel member, and the cross-section is transferred continuously along the axis of the string-like gel member while shape of the cross-section in the radial direction is maintained / or changed. For example, the convexly curved surface means a face having a curvature like a peripheral surface of a cylinder or an aspect such as nearly dome-shape. In addition, convexly curved surfaces in light-emitting device side and in light guide plate side may be same or different from each other, and the convexly curved surface may be formed using nearly dome-shape protrusions or the like on the peripheral surface, for example, as shown in Fig. 5, (c). By making convexly curved surface, when the string-like gel member is placed between light guide plate and light-emitting device, the outer peripheral surface of the string-like gel member is gradually brought into contact while deformed by compression, and therefore, bubble of air or the like hardly enters into both contacting faces, optical transmission loss by bubble in the contacting face can be reduced.
In addition, in the case where both contacting faces are convexly curved surfaces having tackiness, when the optical gel member is placed between light guide plate and light-emitting device, contacting area gradually increases depending on deformation by compression. Therefore, even when tackiness is strong, workability is improved because incorrect pasting can be prevented, and so on. Also, in reworking, since the string-like gel member released from compression restores the shape thereof due to rebound resilience thereof as shown in Fig. 6, the member becomes easily removable depending on shape restoration thereof, and hence rework aptitude is also improved. In addition, since low-pressure contact becomes possible, stress burden by LED can be reduced.
Furthermore, cross-sectional shape of the string-like gel member may be fixed or partially changed, and the part contacting with LED may have a bulge, or the cross-sectional shape may be adapted to the shape of light incident surface of light guide plate. For example, since generally height of light-emitting face of LED (a length in nearly vertical direction to the compression direction by LED and light guide plate, and corresponds to the thickness of light guide plate) is smaller than (or equivalent to) height of incident surface of light guide plate, a shape where light-emitting side of LED is narrow and incident surface side of light guide plate is broad as shown in Fig. 5, (e) is also effective.

In addition, the light-emitting face of LED has various shapes such as flat shape and lens-like convex shape, and shape of the string-like gel member in LED-contacting side can be selected corresponding to shape of the light-emitting face of LED. For example, when light-emitting face of LED is flat or concave, shape of the string-like gel member in LED-contacting side is preferably convexly curved surface, and when light-emitting face of LED is convex, flat is preferable. Further, as for the case where light-emitting face of LED is concave, more specifically, shape of the string-like gel member in LED-contacting side is particularly preferably convex shape like peripheral surface of cylinder.

Hereinafter, the reason of this will be explained.
That is, even a light-emitting face of LED which looks flat, encapsulant parts thereof has sometimes a spherical concaved shape as shown in Fig. 22 (a). In this case, when a shape of the string-like gel member in LED-contacting side is flat or hemispherical, peripheral part of concave part is sealed with the surface of the string-like gel member before air in the concave part in a light-emitting face of LED is eliminated, and an air layer remains in the concave part. Therefore, such case is not preferable. On the other hand, when the string-like gel member in LED-contacting side has a convex shape like a peripheral surface of cylinder, a hemispherical concave part of the light-emitting face of LED comes into contact with a peripheral surface of the cylindrical string-like gel member as shown in Fig. 23 (a). Therefore, when the string-like gel member is pressed to contact with the light-emitting face of LED, contact state gradually transfers from line contact to surface contact while contact area is increased as shown in Fig. 23, (b) to (d), and since the string-like gel member comes into contact with the hemispherical concave part of the light-emitting face of LED while air in the concave part is eliminated, remaining of the air in the contacting part of LED and the string-like gel member can be avoided.

Further, curvature of convexly curved surface of the string-like gel member is appropriately set considering relationship between diameter dimension of the string-like gel member and areas of light-emitting face of LED and incident surface of light guide plate. However, for example, as one example, in the case where the string-like gel member having a cross-sectional shape of round shape is placed between LED and light guide plate as shown in Fig. 29, adjustment of incorporating conditions becomes necessary when restriction in incorporation in optical device due to an excessive bulging as shown in Fig. 29 (b) is generated depending on relationship between dimensions of string-like gel member, light-emitting face of LED and light-emitting panel, when the desired brightness distribution cannot be obtained because of insufl-icient contact state to light-emitting panel, and further when due to excess bulging to light-emitting panel side and side face of light-emitting face of LED, light leaks from the bulged part and brightness is reduced as shown in Fig. 29 (c).
In such cases, a cross-sectional shape as shown in Fig. 30 (a) is preferable. That is, this shape is the one where the part to contact with LED and light-emitting panel has a mild convex shape like peripheral surface of cylinder with a small curvature within a range not to impair the air-removal action in contact, and top and bottom sides in the vertical direction (direction of the face of light-emitting panel) to sandwich direction are flat, that is, the cross-sectional shape of the string-like gel member is, so called, an elliptical shape having flat top and bottom. By employing this shape, the gel member can be brought into contact with the whole area of both of light-emitting face of LED and incident surface of light guide plate surely with a low pushing force as shown in Fig. 30 (d), and in addition, the problems by excessive bulging as shown in Fig. 29, (b) and (c) can be avoided.

Further, as another embodiment, a constitution where a transparent fluid is sealed inside of the string-like gel member as shown in Fig. 33 may be employed. Since compressive repulsive force of the string-like gel member can be reduced, when placed between LED and light guide plate, stress loading to LED or light guide plate can be reduced, and breakage in the contact point of LED or deformation of light guide plate (disarray of fine irregular pattern) can be prevented. In particular, when light guide plate is expanded due to heat generation during light emission of LED in a state where the string-like gel member is placed between LED and light guide plate, a gap between LED and light guide plate becomes small. Therefore, the stress of this case can be reduced by making the surface part of the string-like gel member hard and inside thereof soft.
The transparent fluid to be sealed inside is not particularly limited, so long as the fluid has a transparency at least equivalent to that of the gel material constituting the string-like gel member, and does not vaporize in a temperature range to be used, and silicone oil, thermosetting or UV-curing uncured gel material, and the like are preferable.

Dimensions of the string-like gel member can be appropriately determined by the following concepts.
Firstly, as for width (a length in the direction of compression by LED and light guide plate), it is important to be decided depending on a distance between light guide plate and light-emitting face of LED, and the width may be decided based on the gap so that a width in the predetermined compressed state becomes the gap.
Next, length is decided depending on a distance where LEDs are arrayed, and may be decided essentially based on such condition that length becomes longer than the arrayed distance.
Further, height (a length nearly vertical direction to the direction compressed by LED and light guide plate) may be decided in such way that light-emitting face of LED and whole area of light incident surface of light guide plate can contact with the string-like gel member as an essential condition when placed bwteen, and further corresponding to a special height of the optical device such as liquid crystal display device and lighting equipment to be assembled up. For example, the height may be basically decided to be lower than the gap to be assembled, or may be decided to be a little higher than the special height of holding member and upper and lower parts (within a range not to impair performance and durability), and in such way that the string-like gel member is fixed in intentionally compressed state in the time of incorporation.

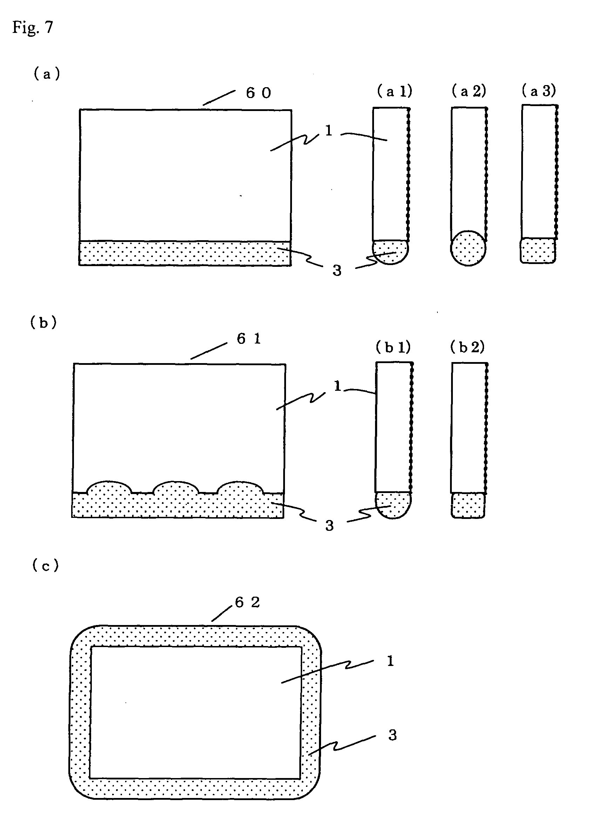

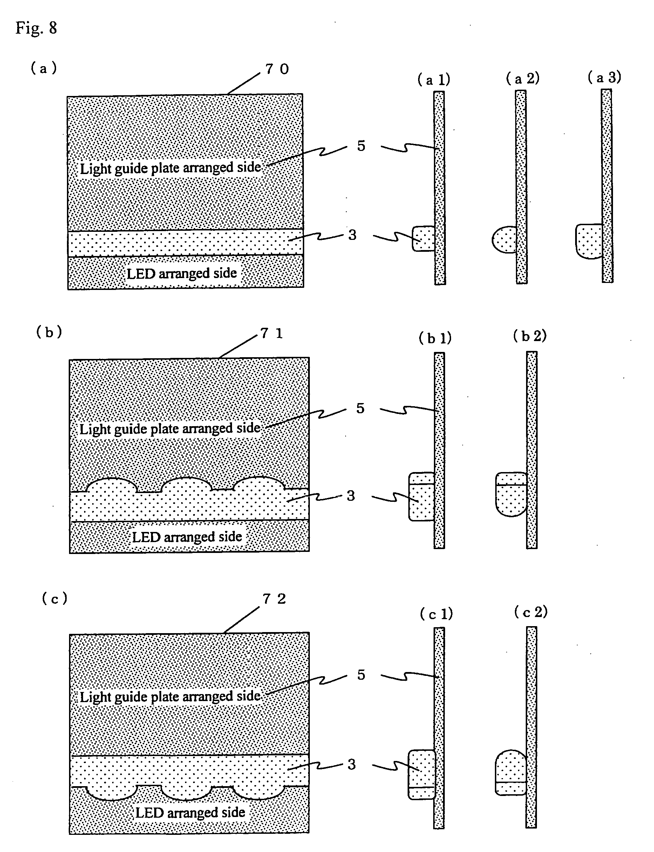

In addition, as another embodiment of the optical gel member of the present invention, the one where the string-like gel member has been integrated at the predetermined position of light guide plate in an optical device such as liquid crystal display device and lighting equipment in advance as shown in Fig. 7 can be used. For example, a method such as an incorporation method where the string-like gel member is engaged in ring-state around the light guide plate and an integrated method where an uncured material of the string-like gel member is cured in contact with the light guide plate can be used. In this time, a hollow-ground groove may be formed in the peripheral surface of the light guide plate so that the string-like gel member fits in the groove. Alternatively, since a reflection sheet is usually used in a structure of the backlight of an optical device such as liquid crystal display device as shown in Fig. 1, the one where the string-like gel member has been integrated at the predetermined position of the reflection sheet in advance can also be used as shown in Fig. 8. In this case, the string-like gel member is laminated on the sheet to be integrated together, and shape of the optical gel member of the present invention may be the one where integrated contacting face thereof in light guide plate side or reflection sheet side is clamped resulting surface contact and other surface may be a curved surface (that is, for example, a state of divided cylinder obtained by dividing cylindrical rod longitudinally). It should be noted that "integration" used herein means a state where the string-like gel member adheres without dropping off from a part of light guide plate, reflection sheet, or the like when the integrated product is handled regardless of adhesive strength, including peelably adhered state and strongly adhered state.

### 2. Properties and performances of optical gel member

The optical gel member of the present invention consists of a string-like gel member, and is used in a gap between light-emitting face of LED which is a light-emitting section of an optical device such as liquid crystal display device and lighting equipment and incident surface of light guide plate opposing to the light-emitting face of LED, which can reduce light incidence loss from LED.
Therefore, properties and performances of the optical gel member includes: (i) the member is transparent; (ii) refractive index is equivalent to or close to that of light guide plate; (iii) harness is moderate; (iv) the member has tackiness and release property for rework aptitude and the like; (v) compression rate and repulsive force are moderate; (vi) the member has low bleeding property; and the like.
Hereinafter, these are explained.

### (i) Transparency

For the optical gel member of the present invention, transparency is an essential requirement. Transparency includes colorless and transparent state, colored and transparent state and translucent state, and for example, for a transparent silicone gel to be used in the present invention, total light transmission rate (in accordance with JIS K7105 "Test method for optical characteristics of plastics") for visible light in the wavelength region of 380 to 780 nm is preferably 80% or more, more preferably 85% or more, and particularly preferably 90% or more.
Transmission rate is an index of transparency of a transparent member, and when transmission rate is less than 80%, for example, light becomes difficult to transmit a transparent member. In addition, the case where the wavelength region where transmission rate is 80% or more is narrower than the region of 380 to 780 nm is not preferable, because light transmission in red color side (high wavelength side) or blue color side (low wavelength side) decreases. Here, transmission rate is a value measured by using a spectral photometer or the like.

In the optical gel member of the present invention, since it is transparent in its entirety, an incident light from LED into the string-like gel member may leak from end part of the string-like gel member as shown in image drawing of Fig. 10. To prevent such leakage of light, the optical gel member of the present invention can have a constitution where light transmission rates in peripheral surface and in end face of the string-like gel member are different with light transmission rate in end face being reduced. By employing such constitution, it becomes possible to transmit more light to light guide plate efficiently.
Here, "light transmission is reduced" means more correctly that more light from LED is reflected toward inside of the gel at a boundary of the end face and the outer layer (air layer) to reduce amount of output light toward the outer layer (transmission rate decreases), and reduction of light transmission rate by light absorption action is not included. Light transmission rate in the end face is desirably 90% or less to light transmission rate in the peripheral surface.
As a method to reduce light transmission rate in the end face, a method where the end face is finely roughened to make it like obscured glass as shown in Fig. 11 (a); a method where a reflective layer is formed on the end face by lining with a high light-reflecting coating material such as aluminum and materials to be used for reflective layer of an optical reflection film as shown in Fig. 11 (b); and the like can be applied.
As a technique to roughen finely the end face, a means where when the string-like gel member is cut, the cut face is intentionally roughened; a means where when the string-like gel member is molded, the surface of a mold corresponding to the end face has been made course; or the like can be applied.
Further, by the similar technological thought, as shown in Fig. 11 (c), (d), not only in the end face, but also in the peripheral surface, light transmission rate in the peripheral surface part other than the part contacting with LED and light guide plate may be reduced. In particular, by adding a reflection layer, light leakage not only from the end face but also from the peripheral surface can be reduced, and more efficient light transmission to the light guide plate becomes possible. In this case, light transmission rate in the peripheral surface part other than the part contacting to LED and light guide plate is desirably 90% or less to the light transmission rate in the part contacting with LED and light guide plate, and similar means to the one to reduce light transmission rate in the end face can be applied. It should be noted that the ratio of light transmission rates in the peripheral surface and the end face is introduced from each light transmission rate measured with sheet-like pieces which have the same surface states as of the peripheral surface and the end face, and are made of the same material and have the same thickness as of the string-like gel member.

### (ii) Refractive index

Refractive index of the optical gel member of the present invention is desirably at least greater than that of air, and differences from refractive indices of the materials of light-emitting face (usually, encapsulated by epoxy resin) of LED and light guide plate are desirably small. As this difference becomes smaller, light reflection at the boundary interface between string-like gel member and light-emitting face of LED or light guide plate becomes less, and the state becomes advantageous to improve light transmission performance.

### (iii) Hardness

Hardness of a transparent gel constituting the optical gel member of the present invention such as, for example, silicone type gel, acryl type gel, polyolefin type gel is 0 to 80 in JIS-A hardness in accordance with JIS K6253 or 20 to 200 in penetration (25°C) in accordance with JIS K2207. Preferably, hardness is 0 to 30 in Asker C hardness in accordance with SRIS 0101 Standard or 20 to 200 in penetration (25°C) in accordance with JIS K2207. Hardness is generally represented by a value measured using a hardness meter corresponding to the hardness range. As for the hardness of the present invention, the value ranges in Asker C hardness and penetration are also included in the value range of JIS A hardness, and hardness in Asker C hardness and/or penetration is also specified in more detail.
It should be noted that "gel" in the present invention means the one having hardness in the above-described hardness range, and includes the concept of rubber.
When hardness is in this range, the gel can be closely adhered following shapes of light-emitting face of LED and incident surface of light guide plate, and optical transmission loss in the adhesion interface can be kept low. Hardness exceeding the range is not preferable because of such troubles that optical transmission loss tends to be generated due to an intervening air layer because the gel can hardly follow the adhesion face, as well as that LED-mounting part (mainly solder-joining section) tends to be damaged due to increased repulsive force during adhesion. In addition, the soft gel having hardness less than the above-described hardness range is not preferable because the gel is difficult to handle resulting in deterioration in workability due to too soft hardness, as well as the gel tends to bleed oil.

In addition, the optical gel member of the present invention may have same hardness in LED side and light guide plate side, but may also have different hardness in LED side and light guide plate side as illustrated in Fig. 12 (a). In such case, it is preferable that LED side is softer (that is, has lower hardness and/or lower compression repulsive force) than light guide plate side because the optical gel member covers LED to reduce optical loss from light-emitting face of LED, and the gel can be adhered so that incorporation becomes easy. In addition, only the LED-contacting part may be made softer as shown in Fig. 12 (b). Similarly, in the optical gel member of the present invention, the internal part may have same hardness as the surface part in LED side and light guide plate side, but hardness of the surface part of the optical gel member may be different from that of the internal part thereof. By making the surface part in the LED side and the light guide side softer than that of the internal part as shown in Fig. 12 (c), the optical gel member is allowed to have stiffness so that handling can be improved, as well as adhesion to LED and light guide plate can be heightened. Further, by having a constitution where the surface part of the optical gel member is harder and the internal part thereof is softer as shown in Fig. 12 (d), when the optical gel member is placed between LED and light guide plate, stress loading to LED and light guide plate can be reduced due to reduced compression repulsive force of the optical gel member, and hence damage in contact point of LED or deformation of light guide plate (disarray of fine irregular pattern) can be prevented. In particular, when light guide plate is expanded by heat generation during light emission of LED in a state where the optical gel member is placed between LED and light guide plate, a gap between LED and light guide plate becomes small, the stress in this case can be effectively relaxed by making the internal part softer.
In the embodiment of Fig. 12 (d), the low hardness gel part 331 in the internal part may be an incompletely-cured gel. It should be noted that when low hardness gel part 331 in this case is incompletely-cured state, penetration (25°C) in accordance with JIS K2207 may be over 200, or cone penetration in accordance with JIS K2220 (1/4 corn) may be 20 or more.
Method to make hardness different is not particularly limited, and includes, for example, (i) a method where a layer having different hardness is provided in one face or in the internal part by co-extrusion; (ii) a molding method where a layer having different hardness is laminated in molding (2-color molding); (iii) a molding method where a raw material having different hardness is used in a mold in molding; (iv) a method where a laminated sheet having different hardness in the surface layer and the back layer is cut out; (v) 2-color printing method where raw materials having different hardness are printed adjacently; (vi) a method where a curing agent (for example, hydrogenpolysiloxane (hereinafter, referred to as SiH oil) for silicone type gel) is coated on the surface of an incompletely-cured gel; and the like.

### (iv) Tackiness and release property

The surface of the optical gel member of the present invention preferably has tackiness and release property. The surface having tackiness can provide an action to improve workability because temporary joint becomes possible when assembling is carried out while the optical gel member is in contact with light guide plate and LED, and an action to avoid such troubles that contacting face is misaligned by vibration or other external force or that the optical gel member drop off from the sandwiched position. Further, even when variation of gap dimension between LED or light guide plate is generated from thermal expansion· shrinkage associated with operation· stop of the optical device, by firmly adhering the optical gel member to light guide plate or LED with a strong tackiness strength (adhesive strength), the light from LED can be surely transmitted to light guide plate, while a state where the optical gel member is closely adhered to light guide plate and LED is maintained, and while stress concentration generated by the dimension variation is relaxed by deformation of the gel member following the variation of gap dimension.
The tackiness is preferably ball No. 5 to 32 in tilt type ball tack test (tilt angle: 30 degree) in accordance with JIS Z0237.
In addition, release property includes that when the optical gel member is peeled off in reworking, the gel member can be peeled off without damaging (material failure) contacting face (release face) with LED and light guide plate, and it is preferable to have such a release property that the optical gel member can be peeled off by hand work, from the viewpoint of reuse of the optical gel member.
Method for providing tackiness may be a method where tackiness of the transparent gel itself is utilized, or a method where tackiness is expressed by adding a pressure-sensitive adhesive to raw material of the transparent gel. In these cases, since the whole optical gel member (including the surface part and the internal part) is formed with the tacky material, cross-section of the string-like gel member can have tackiness. In addition, as another method, a structure where a tacky layer has been laminated on the surface of the gel may be employed. The tackiness layer may be a transparent pressure-sensitive adhesive tape, and the one having no substrate is particularly preferable.
In addition; when the transparent gel material and/or the tackiness component is an addition reaction type polysiloxane-based one (including the case utilizing tackiness of the gel itself), an adjustment to reduce tackiness may be done by contacting a hydrogenpolysiloxane (hereinafter, referred to as SiH oil) component to a tacky face of the optical gel member in cured or incompletely-cured state. As the contacting method, a means such as coating of, spraying of or dipping in an undiluted liquid of SiH oil or a diluted liquid thereof with a solvent can be applied.

Further, the optical gel member of the present invention may have same tackiness in LED side and in light guide plate side, but LED side and light guide plate side may have different tackiness. In such case, it is preferable that LED side has a higher tackiness than light guide plate side as shown in Fig. 13 (a). This is because adhesion reliability and the like in LED side can be heightened by making tackiness in LED side greater, because adhesion in LED side becomes lower due to smaller contact area in LED side than that in light guide plate side. Further, only the part contacting with LED may have a higher tackiness, as shown in Fig. 13 (b).
Method for providing different tackiness is not particularly limited, and includes, for example, (i) a method where a layer having different tackiness is laminated on one face by co-extrusion; (ii) a method where SiH oil is coated on one face of a mold in molding, and molded; (iii) a method where the gel is cured with one face of a mold being opened so that the gel contacts with air, in molding; (iv) a method where a pressure-sensitive adhesive sheet having different tackiness in the surface side and the back side is cut out; (v) a method where a part of the surface of the optical gel member in completely or incompletely-cured state is coated or sprayed with, or dipped in SiH oil; and the like.

### (v) Compressive repulsion characteristics

Since the optical gel member of the present invention is used in a compressed state by LED and light guide plate, in the present invention, not only hardness but also compressive deformation characteristics (compressive repulsion characteristics) becomes an essential constitutional feature. By adjusting strictly both conditions, it can be realized to maintain a constantly stable state where the optical gel member easily follows an abutting face by deforming by lower pressure, and air gap is not generated in the compressed state because repulsive stress after sandwiched is small. As shown in Fig. 19, in the optical gel member, compressive repulsive force can be greatly varied corresponding to hardness or shape. A case where this compressive repulsive force is too great is curve (I) in Fig. 19, however, this case is not preferable, because when the optical gel member is adhered to light guide plate and LED, such troubles can be easily caused that a great repulsive force generated by a small compression rate tends to give a load to a part where light-emitting device is fixed causing a damage, or induce bleeding out (also referred to as bleed-out phenomenon) of a solvent component (oil component and uncross-linked component in the case of silicone type gel) in a transparent gel material. In the optical gel member of the present invention, there is a region where repulsive force gently increases after the start of compression like curve (II) in Fig. 19. The optical gel member of the present invention is preferably placed between LED and light guide plate in this region. As for specific characteristic values, in the case where the optical gel member is compressively deformed at a compression rate of 30% in the radial direction, the repulsive force is preferably 12 MPa or less, and more preferably 3 MPa or less, to accord with both conditions more strictly. The repulsive force greater than this range is not preferable, because repulsive stress in sndwiched becomes great, in particular, LED side tends to have stress concentration due to a smaller contacting face with LED and cause a trouble that LED-mounting part (mainly solder-joining section) becomes easily damaged. Here, the repulsive force is a value calculated from a testing force when the optical gel member is compressed at a rate of 1 mm/min at a 30% compression to the initial thickness in compression direction as amount of thickness deformation in compression direction, and contact area (when upper and lower pressurizing areas are different from each other, an average value thereof) of the optical gel member with pressurizing jig at the timing of the pressurization. In addition, the optical gel member having a convexly curved surface of peripheral surface has an effect that an increase of repulsive force can be made more gentle like curve (III) in Fig. 19.
In addition, in order to make easy for the optical gel member to follow an abutting face by lower pressure, and reduce repulsive stress after sndwiched, the optical gel member in an incompletely-cured state may be placed between light-emitting face of LED and light guide plate, and then cured by heating or irradiating energy ray. It should be noted that "incompletely-cured" used herein means a gel which has been cured in a degree not to flow, and shows a hardness of 95% or less to a hardness of the completely-cured gel.

### (vi) Low bleeding property

The optical gel member of the present invention is compressed by LED and light guide plate, and influenced by heat generation of LED. Therefore, the gel member preferably has low bleeding property for the purpose to avoid troubles such as contact fault of electric parts by bleed oil because the gel member tends to bleed oil. To have low bleeding property, desirably a particular branched type silicone gel is used as a silicone gel as described later.

### (vii) Compression set characteristics

Since the light guide plate is used in an incorporated state in an optical device, it repeats expansion· shrinkage, that is, when optical device is operated, the light guide plate expands by an effect of temperature generated from various kinds of electronic parts including LED, on the other hand, when stopped, the light guide plate returns to the initial size by shrinking associated with decrease of temperature. In particular, in the case of plastic light guide plate, a gap variation between LED and light guide plate occurs by this expansion· shrinkage due to a great thermal expansion coefficient. That is, the optical gel member is used in a circumstance where the gel member is repeatedly compressed. In this case, when the optical gel member has a great compression set, deformation of the optical gel member (in particular, shape restoration of the optical gel member when gap is enlarged) cannot follow the gap variation, and contact area of the optical gel member and LED and/or light guide plate decreases (in an extreme case, a gap is generated), and as a result, optical transmission efficiency may decrease. In particular, when LED is arranged on side face of the base in a large-sized light guide plate through the optical gel member, compression set tends to occur more easily because weight of the light guide plate and the like are loaded.
Consequently, in the optical gel member of the present invention, preferably compression set is small, and specifically, compression set in accordance with JIS K6262 is preferably 50% or less, and more preferably 30% or less.

### 3. Material for optical gel member

The optical gel member of the present invention consists of at least one kind of transparent gel selected from transparent silicone type gel, acryl type gel, polyolefin type gel, polyurethane type gel, butadiene gel, isoprene gel, butyl gel, styrene-butadiene gel, ethylene-vinyl acetate copolymer gel, ethylene-propylene-diene ternary copolymer gel or fluorine gel, and selected depending on application conditions to an optical device. In particular, when low heat resistance or compression set is required, silicone type gel is suitable.

### (i) Silicone type gel

Since silicone type gel is superior in heat resistance, small in temperature dependencies of various characteristics, and further low in compression set, the gel is suitable when a high output LED is applied or effect of thermal expansion· shrinkage of light guide plate is great. As the silicone gel in the present invention, a known commercially available silicone type gel can be applied, so long as it satisfies various characteristics as the requirements of the present invention. In addition, as for the silicone type gel, any of addition reaction type, condensation type, energy ray curing type, millable type (hot vulcanization type) can be used, but addition reaction type silicone-based gel is preferable. Further, the one which does not exhibit yellowing over time by heat or the like is particularly preferable.
As the above-described addition reaction type silicone gel, a silicone compound which is commonly used as one of the heretofore known and commercially available various silicone materials can be appropriately selected and used. Therefore, any of heat curing type or room temperature curing type, and condensation type or addition type in curing mechanism, and the like can be used, in particular, a silicone gel obtained from an addition type silicone composition is preferable.
In addition, as the silicone type gel relevant to the present invention, phenyl type is particularly preferable to obtain a high refractive index. Further, for the purpose to provide a high refractive index or tackiness, various modified silicone gels such as epoxy-modified silicone type and acryl-modified silicone type may be applied.

As a specific addition reaction type silicone gel material, for example, trade name: CF-5106 (penetration: 150) produced by Dow Coming Toray Co., Ltd. and the like are superior. In this silicone gel material, silicone resin as a raw material is composed of liquid A and liquid B, and by mixing these both liquids in a predetermined ratio and heating, a silicone gel material having the desired penetration and the like can be obtained.

The silicone type gel has a tackiness derived from non-cross-linkable functional group on the surface, but those applied with known method for providing tackiness can be used such as, for example, the one blended with MQ resin type tackiness furnishing component, added with nonreactive tackiness component, or expressed tackiness by adjusting a side chain length of non-cross-linkable functional group or the like.

### (ii) Branched type silicone gel

In the present invention, the above-described silicone type gel can be used, but when bleeding of a solvent in the gel is reduced, it is desirable to use the following particular branched type silicone gel.
The branched type silicone gel is obtained by heat curing a composition comprising (A) a branched type organopolysiloxane, (B) an organohydrogenpolysiloxane, and (C) a catalyst for addition reaction, instead of linear type silicone gel of alkenylpolysiloxane. Hereinafter, the branched type silicone gel is explained.

The branched type organopolysiloxane of the above-described component (A) in uncured state preferably has a viscosity measured by a co-axial-cylinder rotational viscometer in accordance with JIS K8803 at 25°C in a range of 10 to 100,000 Pa·s, and represented by the following general formula (1).

General formula (1): [R¹ₐSiO_{(4-a)/2}]ₚ[R²₂SiO_{2/2}]_{q}[R²_{b}R³_{c}SiO_{(4-b-c)/2}]ᵣ

(wherein R¹ is a same or different kind of monovalent hydrocarbon group having 1 to 10 carbon atoms, R² is a same or different kind of monovalent hydrocarbon group having 1 to 10 carbon atoms, R3 is a same or different kind of alkenyl group having 2 to 10 carbon atoms, a is 0 or 1, b is an integer of 0 to 2, c is an integer of 0 to 3, provided that the above symbols satisfy the following relationships: for b and c, 2≤b+c≤3, and for p, q and r, 1≤p≤30, 100≤q, and 2≤r, and 0.1≤[100×p/(p+q+r)] ≤5.0).

The monovalent hydrocarbon group having 1 to 10 carbon atoms represented by R¹ in the above-described general formula (1) includes specifically linear alkyl group such as methyl group, ethyl group, propyl group, butyl group, pentyl group, hexyl group, heptyl group, octyl group, nonyl group and decyl group; branched alkyl group such as 1-methylbutyl group, 2-ethylbutyl group and 2-ethylhexyl group; cycloalkyl group such as cyclopentyl group and cyclohexyl group; alkenyl group such as vinyl group, allyl group, butenyl group and hexenyl group; aryl group such as phenyl group and tolyl group; and the like, preferably an alkyl group having 1 to 3 carbon atoms such as methyl group, ethyl group and propyl group, and more preferably methyl (CH₃-) group because synthesis is easy and heat resistance and physical properties of a cured silicone gel to be obtained are superior. These groups where hydrogen atom is partially substituted by other atom or bond are also included. Also, R¹, when plurally exists (a=1, p≥2), may be same or different from each other.

In addition, R² in the above-described general formula (1) is a monovalent hydrocarbon group having 1 to 10 carbon atoms, and includes specifically linear alkyl group such as methyl group, ethyl group, propyl group, butyl group, pentyl group, hexyl group, heptyl group, octyl group, nonyl group and decyl group; branched alkyl group such as 1-methylbutyl group, 2-ethylbutyl group and 2-ethylhexyl group; cycloalkyl group such as cyclopentyl group and cyclohexyl group; aryl group such as phenyl group and tolyl group; and the like, preferably an alkyl group having 1 to 3 carbon atoms such as methyl group, ethyl group and propyl group, and more preferably methyl (CH₃-) group because synthesis is easy and heat resistance and physical properties of a silicone gel to be obtained are superior. These groups where hydrogen atom is partially substituted by other atom or bond are also included. Also, R² may be same or different from each other.

Further, R³ in the above-described general formula (1) is an alkenyl group having 2 to 10 carbon atoms, and includes specifically vinyl group, allyl group isopropenyl group, cyclohexenyl group, and the like. R³ is preferably vinyl group because this group can easily react by many kinds of catalyst. Also, R³, when plurally exists, may be same or different from each other.

In addition, in the general formula (1), a is 0 or 1, b is an integer of 0 to 2, c is an integer of 1 to 3, and b and c satisfy 2≤b+c≤3. Preferably a is 1, b is 1, and c is 1.
Further, p, q and r are numbers satisfying 1≤p≤30, 100≤q, 2≤r, and 0.1≤[100×p/(p+q+r)] ≤5.0. Preferably p is 3 to 20, q is 300 to 3,000, and r is 5 to 17.

The above-described p, q and r represent composition ratio of siloxane components constituting the branched type organopolysiloxane of component (A). By values of p, q and r, mode of cured component (A) varies, and with increasing composition ratio p, cured component (A) varies from gel state to rubber state, and further to resin state. As a result, mode of the cured silicone also varies in the similar way, and an essential requirement for the cured silicone relevant to the present invention to have flexibility unique to gel is a condition that the composition ratio p satisfies 0.1≤[100×p/(p+q+r)] ≤5.0.
Here, p is a numerical value to specify a number of side chain (number of branch from the main chain), and also an important factor contributing to low bleeding property. Preferably p is 3 to 20, that is, number of side chain branched from the main chain Si-O is 3 to 20 per molecule, and particularly preferably 5 to 15. When p is 2 or less, effect of low bleeding property is little, and difficult to reach a level of improved oil bleed compared to the conventional product. On the other hand, p exceeding 20 is not preferable for use such as gel sheet, because oil bleed becomes more adversely. Further, in the relationship between a value of p and an amount of oil bleed, amount of oil bleed becomes the minimum in a range of 5 to 15, which is particularly preferable range of p.

In addition, q is the number of repeating unit Si-O, and a numerical value specifying a length of linear chain of polysiloxane. With greater q, a length of the linear chain becomes longer, and molecular weight becomes also greater when side chain condition is same.
q is a factor involved in low bleeding property after curing as well as viscosity of component (A) before curing having a relation with p. As for low bleeding property, for example, when p is constant and q becomes greater, uncross-linked component (A) molecule in suspension after curing becomes harder to have molecular movement, and as a result, oil bleed is reduced. In addition, when p increases associated with increase of q, or when p increases associated with decrease of q, or so on, since cross-linked network after curing becomes denser, and also molecular movement of component (A) molecule in suspension after curing is restricted by inter-molecular steric hindrance, as a result, oil bleed is more reduced.
In the present invention, it is an essential requirement that q is 100 or more. When q is less than 100, a sufficient effect of oil bleed reduction cannot be obtained within the range of p of the present invention. On the other hand, as for viscosity of component (A) before curing, generally, viscosity increases associated with increase of q, and viscosity decreases associated with decrease of q.
In the present invention, more preferable range of q is 300 to 3,000, where a sufficiently low bleeding property can be obtained, as well as viscosity suitable for handling can be obtained.

Further, r represents a content of alkenyl group which reacts with a hydrogen atom bonding to silicon in component (B) by heating. In order to obtain a cured gel by cross-linking, at least 2 alkenyl groups are necessary in a molecule. When r = 1, cured gel cannot be obtained because cross-linking does not occur after reaction. For this reason, r is necessarily 2 or more.
In addition, when p, q and r stray from the relationship of 0.1≤[100×p/(p+q+r)] ≤5.0, a cured gel having low bleeding property cannot be obtained.

The branched type organopolysiloxane of component (A) specifically includes, for example, those represented by the following general formula.

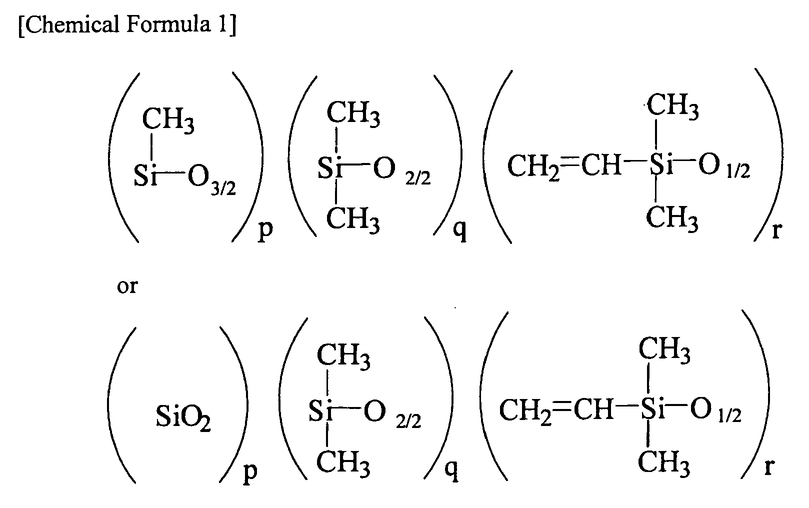

In the above-described general formula, p,q and r are numbers satisfying the following relationships: 1≤p≤30, 100≤q, and 2≤r, and 0.1≤ [100×p/(p+q+r)] ≤5.0).

The branched type organopolysiloxane of component (A) contains a tri-functional or tetra-functional siloxane of one or more and less than 30. In addition, the branched type organopolysiloxane of component (A) has 2 or more alkenyl groups which react with organohydrogenpolysiloxane of component (B) to give cured silicone gel.

In addition, a standard polystyrene equivalent weight average molecular weight (Mw) by gel permeation chromatography of component (A) in the present invention is preferably 1,000 to 100,000. Weight average molecular weight (Mw) is an averaged value of molecular weight of component (A) which is determined corresponding to structural factors such as length of main chain, number and length of side chain. Since depending on the structural factors, size of three-dimensionally cross-linked network after curing and level of difficulty of molecular movement of uncross-linked suspending component (A) in cured state vary, as a result, the structural factors have deep relations with low bleeding property. Further, as described about the q, the structural factors relate to viscosity of component (A) before curing. Specifically, effects on viscosity of component (A) before curing are as described for the p and q.
From the viewpoint of low bleeding property, when weight average molecular weight (Mw) is less than 1,000, a sufficient low bleeding property cannot be obtained, and contrary when weight average molecular weight (Mw) exceeds 100,000 provided that p is small, cross-linked network structure becomes coarse, and sufficient low bleeding property cannot be obtained. On the other hand, from the viewpoint of viscosity before curing, when weight average molecular weight (Mw) is less than 1,000, viscosity of component (A) before curing becomes low, and cured silicone gel having a homogeneous composition cannot be produced. Further, when weight average molecular weight (Mw) exceeds 100,000, viscosity of composition is increased, and such trouble occurs that workability of mixing is deteriorated.

The composition relevant to the present invention is blended with organopolysiloxane as component (B). The organopolysiloxane of component (B) is known compound which has 2 or more hydrogen atoms bound to silicon atom in a molecule. However, when the number of alkenyl group in the branched type organopolysiloxane of component (A), the number of hydrogen atom bound to silicon atom in organohydrogenpolysiloxane of component (B) is 3 or more. Location of these hydrogen atom bound to silicon atom may be either terminal or side chain of the organopolysiloxane.

In addition, addition reaction catalyst (C) may be any catalyst which is known to accelerate an addition reaction (hydrosilylation reaction) of an alkenyl group bound to silicon atom in component (A) and a hydrogen atom bound to silicon atom in component (B). Usually, platinum-group metal type catalyst is used, which includes, for example, platinum-based catalyst such as chloroplatinic acid, alcohol-modified chloroplatinic acid, a complex of chloroplatinic acid and vinyl siloxane and chloroplatinic acid-2-ethylhexanol solution; palladium-based catalyst such as tetrakis(triphenylphosphine)palladium and a mixture of palladium black and triphenylphosphine; rhodium catalyst; and the like. Among them, chloroplatinic acid-2-ethylhexanol solution is preferable.

Amount of these catalysts to be blended may be, so called, a catalytic amount. Usually, the amount is in a range of 0.1 to 100 ppm (catalytic metal element equivalent) to the total amount of component (A) and component (B).

In the case where the branched type organopolysiloxane of component (A) is applied, in the composition relevant to the present invention, amount of hydrogenpolysiloxane as a cross-linking agent to be blended is an amount so that the hydrogen atom bound to silicon atom becomes 0.1 to 1.5, and preferably 0.2 to 1.2 per one alkenyl group bound to silicon atom of component (A). When the hydrogen atom bound to silicon atom is less than 0.1, a trouble of incomplete curing occurs due to insufficient degree of cross-linking. Contrary, the hydrogen atom exceeds 1.5, it is difficult to obtain a cured addition reaction curing type silicone gel having the desired penetration (20 to 200), and further, physical properties of this addition reaction curing type silicone gel tend to vary with time.
In addition, amount of platinum catalyst to be blended is usually in a range of 0.1 to 100 ppm (catalytic metal element equivalent) to the total amount of component (A) and hydrogenpolysiloxane as described above.
The above-described hydrosilylation reaction can be carried out using known technology.

The cured silicone gel having low bleeding property relevant to the present invention is obtained by heat curing the above-described composition.
Method for producing the cured silicone gel relevant to the present invention is not particularly limited, but usually obtained by performing hydrosilylation reaction (addition reaction) of branched type organopolysiloxane of component (A) and organohydrogenpolysiloxane of component (B) as raw materials in the presence of an addition reaction catalyst of component (C).
The above-described hydrosilylation reaction can be carried out using known technology.

### (iii) Acryl type gel

Furthermore, as the above-described acryl type gel, various polymers obtained by polymerizing monomers comprising acrylate ester which is used for pressure-sensitive adhesive and the like can be used. For example, a polymer obtained by polymerizing or copolymerizing acrylic monomer such as ethyl (meth)acrylate, n-propyl (meth)acrylate, isopropyl (meth)acrylate, n-butyl (meth)acrylate, isobutyl (meth)acrylate, 2-ethylhexyl (meth)acrylate, n-hexyl (meth)acrylate, n-amyl (meth)acrylate, isoamyl (meth)acrylate, octyl (meth)acrylate, isooctyl (meth)acrylate, isomyristyl (meth)acrylate, lauryl (meth)acrylate, nonyl (meth)acrylate, isononyl (meth)acrylate, isodecyl (meth)acrylate, tridecyl (meth)acrylate, stearyl (meth)acrylate and isostearyl (meth)acrylate can be used. It should be noted that the above-described acrylate ester to be used in (co)polymerization may be used alone or in combination of two or more kinds.

### (iv) Polyolefin type gel

In addition, as a transparent gel relevant to the optical gel member of the present invention, polyolefin type gel can be used, and from the viewpoint of productivity, in particular, polyethylene type gel which is superior particularly in transparency, elongation and surface strength can be preferably included.

### (v) Other transparent gel

In addition, as a transparent gel relevant to the optical gel member of the present invention, in addition to the above-described silicone type gel, acryl type gel and polyolefin type gel, transparent polyurethane type gel, butadiene gel, isoprene gel, butyl gel, styrene-butadiene gel, ethylene-vinyl acetate copolymer gel, ethylene-propylene-diene ternary copolymer gel or fluorine gel can be used.

Further, as another embodiment of the optical gel member, light diffusion action may be added to the optical gel member, as shown in Fig. 32. By this technique, outgoing light from LED which is a point light source can be injected into a light guide plate after being diffused by the optical gel member, and hence designing of light guide plate having a uniform outgoing distribution becomes easy.
As a method for providing light diffusing action, a diffusing method where a light diffusing agent (or diffusing agent) is mixed and dispersed in the transparent gel, for example, for the case of embodiment as shown in Fig. 32 (a); a method where a composition containing a light diffusing agent is coated on the surface of optical gel member, for example, for the case of embodiment as shown in Fig. 32, (b) to (c); a method where a diffusing layer is formed on the surface of optical gel member by coextruding a transparent gel material and a transparent gel material containing dispersed diffusing agent; or the like can be applied.
As the above-described light diffusing agent (or diffusing agent), a material to be applied to known light diffusing parts can be applied. For example, an inorganic light diffusing agent includes silica, white carbon, talc, magnesium oxide, zinc oxide, titanium oxide, calcium carbonate, aluminum hydroxide, barium sulfate, calcium silicate, magnesium silicate, aluminum silicate, sodium aluminum silicate, zinc silicate, glass, mica, and the like. In addition, an organic light diffusing agent includes styrene-based polymer particle, acrylic polymer particle, siloxane-based polymer particle, polyamide type polymer particle, and the like. These light diffusing agents can be used alone or in combination of two or more kinds.
In addition, to obtain superior light diffusion characteristics, these light diffusing agents may have a porous structure such as petal-shaped and spherocrystal-like. It should be noted that the light diffusing agent is added or mixed in an amount in a range where light permeability is not impaired.

### 4. Method for using optical gel member and applications thereof

The optical gel member of the present invention is placed, for example, in a gap between light guide plate of backlight in a liquid crystal display (LCD) and light-emitting section (LED) as a light source arranged on the side face of the light guide plate as shown in Fig. 3, and also can be generally applied to an optical device having an optical constitution combining light-emitting section and light guide plate. It should be noted that as a substrate where LED is mounted, known substrate such as flexible substrate and glass-epoxy substrate can be applied.
As the optical gel member, by using a string-like transparent gel member, light incidence loss from LED can be reduced. In addition, when a plurality of LEDs are used, even if there is variation in mounting positions of a plurality of LEDs to substrate, light from LED can be efficiently introduced into light guide plate by filling the gaps with the optical gel member.

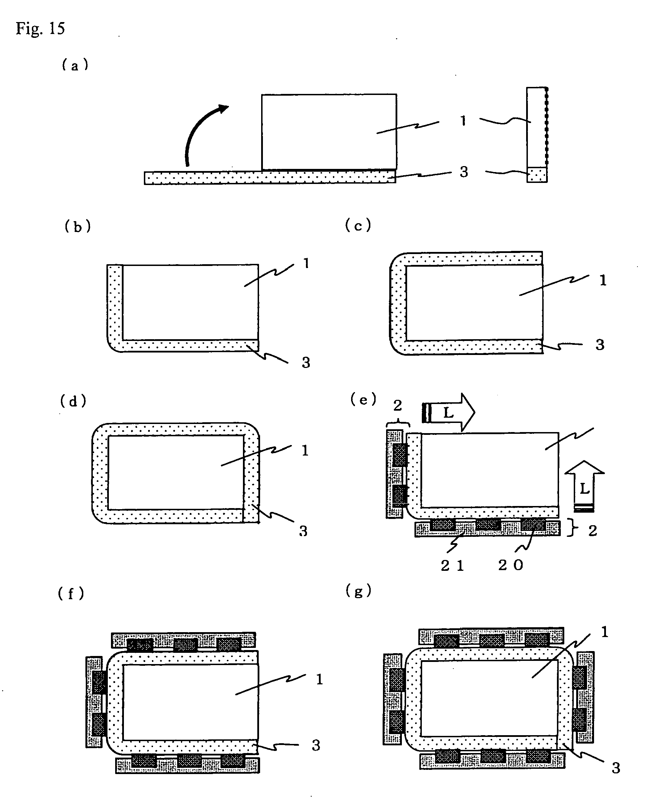

In addition, method for using the optical gel member of the present invention will be exemplified below together with incorporating method.
As the first incorporating form, an assembling method of an optical device characterized by comprising compressively fixing the optical gel member by sandwiching with light guide plate in an optical device such as liquid crystal display device and lighting equipment and light-emitting device consisting of light-emitting diode (LED), can be applied.
According to this method, for example, as shown in Fig. 14, a light guide plate (or a light-emitting device consisting of LED) is brought into contact with a string-like gel member, then a light-emitting device consisting of LED (or a light guide plate) is brought into contact therewith, further the light guide plate and the light-emitting face of LED are brought into even contact with the string-like gel member by deforming the gel member by compressing, to fix the string-like gel member. In addition, when the string-like gel member is applied to 2 or more sides of a light guide plate, the string-like gel member may be incorporated for each side, or the string-like gel member having a length corresponding to 2 to 4 sides may be twisted around the peripheral surface of the light guide plate to be fitted on, as illustrated in Fig. 15. In particular, when the string-like gel member is applied to 4 sides of light guide plate, such a method may be applied that the string-like gel member is formed in closed loop (ring-like), and engaged on the peripheral surface of the light guide plate.
Further, such a method may be applied that an optical component to which the string-like gel member has been adhered and integrated in advance is incorporated in the above-described light guide plate, light-emitting device, optical sheet; or the like. The string-like gel member may be adhered to light guide plate, light-emitting device, optical sheet, or the like in a peelable degree, or may be tightly adhered and integrated. For example, the string-like gel member can be incorporated using an optical component where a reflection sheet and the string-like gel member have been integrated, as shown in Fig. 16.

Furthermore, when dislocation of the string-like gel member from the predetermined contact position is prevented in the process that the string-like gel member is placed in a gap between incident surface of light guide plate and light-emitting face of LED, the string-like gel member may have a roughly U-shaped cross-sectional shape, where the string-like gel member has projection parts 370 a and 370 b in the both ends in the thickness direction of the string-like gel member projecting out adjacent to the abutting face with incident surface of light guide plate (or light-emitting face of LED) as illustrated in Fig. 35, (a) and (b), to be able to interdigitate so that the incident surface of light guide plate or the light-emitting face of LED are covered, as shown in Fig. 36 and Fig. 37, respectively. It should be noted that the U-shaped cross-sectional shape may be same through the full length in the longitudinal direction of the string-like gel member, or may have a cross-sectional shape where length of the projection part is partly varied, or further only a part of the string-like gel member may have the U-shaped cross-sectional shape.
When abutting face of the string-like gel member in contact with incident surface of light guide plate (or light-emitting face of LED) is convexly curved surface, the projection part may have a shape where the forefront of the projection part protrudes than the forefront of the convex abutting face, and may formed in pair so that the string-like gel member is fixed in such a degree not to drop off when the string-like gel member is interdigitated to cover the incident surface of light guide plate (or the light-emitting face of LED).
In addition, shape of the projection part is not particularly limited, so long as it is interdigitatable shape. The whole shape may be decided so that the string-like gel member can be fixed in a degree not to drop off when it is interdigitated to cover incident surface of light guide plate or light-emitting face of LED, and length, width, thickness and projection angle thereof may be decided so that the string-like gel member can be fit without any difficulty in assembling surrounding parts. For example, the projection part may be sheet-like or a form which is difficult to fall off from light guide plate by providing a groove or projection on the face contacting with light guide plate.
By making cross-sectional shape U-shaped, and interdigitating to cover incident surface of light guide plate or light-emitting face of LED, the string-like gel member is positioned on the incident surface of light guide plate or the light-emitting face of LED, and position gap in assembling becomes hardly to occur, and hence workability is improved. In particular, in assembling of an optical device, even in the conventional assembling system of liquid crystal display device where LED is mounted and fixed first and then light guide plate is incorporated, the string-like gel member can be incorporated without falling off or position gap. In this case, U-shaped string-like gel member interdigitated with light guide plate may be incorporated while LED-abutting face of the string-like gel member is pressed to light-emitting face of LED, or after the string-like gel member is interdigitated with fixed light-emitting face of LED, light guide plate may be pressed to be incorporated.
In addition, after incorporation, position gap in contact section of the string-like gel member due to the influence of vibration and heat expansion or shrinkage of light guide plate becomes hardly to occur.
Further, in assembling of backlight unit, when a sufficient assembling gap cannot be secured in the thickness direction of light guide plate, cross-sectional shape of the string-like gel member may be roughly L-shaped having only one projection part rather than the above-described U-shaped as illustrated in Fig. 38; (a) and (b), or the string-like gel member may be incorporated in any configuration of Fig. 39, (a) to (d), and the string-like gel member can be incorporated in the same way as in the case of the above-described U-shaped cross-sectional shape.
Furthermore, one string-like gel member may have a part of U-shaped cross-section and a part of L-shaped cross-section.

In addition, as the second incorporating form, when a laminated body where a release film and an optical gel member are laminated in a peelable state is used as illustrated in Fig. 9, there is included a method for assembling an optical device **characterized in that** the optical gel member which is obtained from the laminated body by peeling off the release film is sandwiched and compressively fixed with light guide plate in an optical device such as liquid crystal display device and lighting equipment and light-emitting device consisting of light-emitting diode (LED).
According to this method, there are remarkable effects as follows. That is, since the string-like gel member is laminated with a release film in a peelable state, even when handling of the string-like gel member is difficult because the gel member is thin or flexible, easy incorporation of the string-like gel member is realized. In addition, by optimizing shape of the release film, the release film can play a role of positioning jig in incorporation, and incorporation at a correct position becomes possible.
This method includes an in-between placing method where release film is removed and an exposed face of the optical gel member is brought into contact with LED and light guide plate, respectively, and an in-between placing method where a part other than the exposed face by peeling off is brought into contact with LED and light guide plate, respectively.
In the former method, for example, when both faces of the string-like gel member are laminated with release films, as shown in Fig. 17, a release film on the side to be contacted with light guide plate is peeled off from the string-like gel member, and an exposed face of the string-like gel member is brought into contact with light guide plate, subsequently a release film on the side to be contacted with LED is peeled off, and an exposed face of the string-like gel member is brought into contact with light-emitting face of LED, and further the string-like gel member is compressed with LED and light guide plate.

In addition, in the latter method, for example, in the example where the string-like gel member laminated with a release film on one face is used, as shown in Fig. 18, the string-like gel member with a release film, light guide plate and light-emitting device of LED are arranged, side face (roughly vertical face to the laminated face) of the string-like gel member is brought into contact with predetermined faces and placed concurrently or sequentially, subsequently the release film is removed. Removal of the release film may be carried out either during or after completion of the in-between placing, and may be appropriately adjusted corresponding to shape, hardness, tackiness, and the like of the string-like gel member.
In order to obtain the above-described effect, the release film is preferably at least wider in width and longer in length than the string-like gel member.
As the release film, a film having releasing layer of an organic resin such as alkyd resin type, fluorosilicone type, fatty acid amide type, polyethersulfone resin type, cellulose acetate resin type, polyimide resin type, polyester resin type, polyether resin type, epoxy resin type, phenol resin type, polyamide resin type, polyolefin (for example, polypropylene) type; a film where these organic resins are laminated with other organic resin: or a film where these organic resins are coated on the surface of other organic resin film; and the like can be used. In particular, alkyd resin type, fluorosilicone type and fatty acid amide type are preferable, and in the case of high tackiness, fatty acid amide type is preferable, and bisamide type is particularly preferable. In addition, in the case of the form where release films are laminated on both faces, or in the case where the string-like gel member has different tackiness, it is preferable to use a combination which gives a superior peeling selectivity (a state avoiding so called, tearful parting phenomenon) by changing the kind of release film for each face.

Further, as the third incorporating form, the string-like gel member may be pushed in or inserted into the gap between light guide plate and light-emitting device consisting of light-emitting diode (LED) of an already assembled up optical device. In this case, a string-like gel member having low tackiness and soft hardness is suitable.

In these incorporating methods, compression rate in the compressing direction in sandwiching of the string-like gel member is preferably 50% or less, and when contacting face of the string-like gel member is convexly curved surface, preferably 1 to 40%, and more preferably 5 to 40%. When compression rate is in this range, there is an effect of solving the light-passing distance variation factor associated with variation in mounting positions of LEDs aligned in the light-emitting device and gap from allowable position in backlight assembling. It should be noted that the compression rate means a value in percent of compression deformation amount (a value of thickness before deformation minus thickness after deformation) divided by thickness before deformation. Compression rate exceeding 50% is not preferable, because oil bleed is easily induced or LED tends to be overloaded. In addition, when contacting face of the string-like gel member is a convexly curved surface, compression rate less than 1% is not preferable, because the string-like gel member cannot come into sufficient contact with light-emitting face of LED and light guide plate due to insufficient contact in the end of the convexly curved surface.
Furthermore, in these methods, the string-like gel member in an incompletely-cured state may be incorporated in the gap, after that, the string-like gel member may be completely cured by heating and/or irradiation of energy ray. According to this method, the following effects can be obtained. That is, the string-like gel member can be contacted in a well-followed state with the gap between light-emitting device and light guide plate. In addition, repulsive force by the string-like gel member after curing can be reduced. As a material for such string-like gel member, for example, a silicone type material such as SOTEFA produced by Dow Coming Toray Co., Ltd. can be applied.

Further, as the fourth incorporating method, there is included a method comprising reducing diameter of string-like member of said optical gel member by stretching the optical gel member in advance (Fig. 21 a); inserting the string-like gel member into a gap between light incident surface of light guide plate and light-emitting face of light-emitting device consisting of light-emitting diode (LED) of an optical device already assembled up while the stretched state is maintained (Fig. 21 b); restoring the string-like gel member to original shape by releasing the tension of said optical gel member (Fig. 21 c); and connecting light incident surface of said light guide plate and light-emitting face of said light-emitting device via the optical gel member (Fig. 21 d).
Here, the diameter of the string-like member is not limited to a diameter when cross-sectional shape is circular, but also includes a thickness of the optical gel member in the part to be placed between light-emitting face of LED and incident surface of light guide plate. As for stretching of the optical gel member, direction to be stretched is not particularly limited, so long as the optical gel member is stretched until diameter becomes a level which is possible to be inserted into the gap between light-emitting face of LED and incident surface of light guide plate, however, from the viewpoint of workability, it is desirable to stretch in the longitudinal direction as shown in Fig. 21 a. In addition, the stretched state of the optical gel member when it is inserted into the gap between light-emitting face of LED and incident surface of light guide plate, is not necessarily maintained in the same state as the stretched state before insertion, and the stretched state may be maintained in a level of diameter which is possible to be inserted.

Subsequently, by releasing the extension of the optical gel member, diameter of the optical gel member is restored to the original one as shown in Fig. 21 c. In this case, since the string-like gel member shrinks in the longitudinal direction while the string-like gel member is rubbing light-emitting face of LED and/or incident surface of light guide plate, the string-like gel member can be uniformly restored to the original shape thereof, if a lubricant is coated on the surface of the optical gel member. As the lubricating component, a transparent liquid (a) such as silicone oil and alcohol is preferable. An organic solvent such as alcohol is particularly preferable, because it is easily evaporated after the optical gel member has been incorporated. On the other hand, a transparent oil component such as silicone oil remains after incorporation, but since air elimination of contacting face between light-emitting face of LED and incident surface of light guide plate and the optical gel member is promoted, as well as adhesion is improved, it is preferable to coat the transparent oil component within an amount not to flow out after incorporation. It should be noted that the "liquid" used herein means a material which can be coated and has a nature to exhibit flow deformation by application of force. When the liquid is coated on the surface of the optical gel member, a liquid having low viscosity is preferable.
In addition, aside from the incorporation method where the string-like gel member is incorporated in the whole area of gap between LED and light guide plate at a time, as the method shown in Fig. 21, there may be employed a method comprising after inserting and fixing a part of the optical gel member between LED and light guide plate, stretching one end of the optical gel member as shown in Fig. 34 (a); pushing in the optical gel member between LED and light guide plate, and partially inserting the optical gel member by the operation to release the tension; and inserting the optical gel member into the whole gap by repeating this procedure (Fig. 34 (c)).
In these exemplified embodiments where the optical gel member is incorporated by stretching the gel member, the optical gel member preferably has 50% or more of tensile elongation (in accordance with JIS K6251), and a material which is hardly torn off in the stretched state is more preferable, for example, polyolefin type gel, in particular, polyethylene gel is suitable.

In addition, for example, when light-emitting face of LED is concave-shaped as illustrated in Fig. 22, and the optical gel member cannot perfectly follow the concave-shaped part (Fig. 22 c), by employing a structure where a transparent liquid (b) is interposed between light-emitting face of LED and the optical gel member, air gap between light-emitting face of LED and the optical gel member is disappeared, and reduction of brightness can be avoided.
As a method for interposing the transparent liquid (b), a method where the transparent liquid is coated on light-emitting face of LED and/or incident surface of light guide plate; or a method where the transparent liquid is coated on the surface of the optical gel member (at least the part to be contacted with light-emitting face of LED and/or incident surface of light guide plate); or the like can be applied. The transparent liquid is not particularly limited, so long as the transparent liquid is insulating, and has superior wettability (surface tension is low) against the face to be contacted (light-emitting face of LED and/or incident surface of light guide plate, surface of the optical gel member), however, silicone oil is particularly preferable. As the silicone oil, either of hydrophobic type or hydrophilic type can be applied. Since silicone oil is superior in gas permeability, even when a fine air bubble is trapped in the contact interface of the optical gel member and light-emitting face of LED or incident surface of light guide plate, the silicone oil has an action to extinguish the air bubble.
Viscosity of the transparent liquid (b) is not particularly limited, so long as the liquid can exhibit flow deformation by pressurization. Aside from this, as the transparent liquid, a material which exhibits viscosity increase or solidify while maintains transparency after coating, such as a cross-linkable low viscosity raw material of silicone gel may be applied, and this material is effective in prevention of bleed out of the transparent liquid after coating. In addition, a low viscosity transparent optical adhesive or pressure-sensitive adhesive may be applied to improve adhesive force between the optical gel member and light-emitting face of LED or incident surface of light guide plate after incorporation.
It should be noted that the transparent liquid state, even a solvent (oil component or the like) bled out from a transparent gel constituting the optical gel member, is presumed to exhibit the similar effect. However, the method of interposing the transparent liquid body is carried out while physical properties of the optical gel member are maintained, whereas in the method of bleeding, physical properties of the optical gel member such as hardness and compressive repulsive force vary. Therefore, attention should be paid that this method is not preferable.

Further, in pushing in, placing and incorporating the optical gel member between light-emitting face of LED and incident surface of light guide plate, when area of the light-emitting face of LED is small or when distance between adjacent LEDs is great, the optical gel member sometimes deforms so that the optical gel member enters into the gap between adjacent LEDs as shown in Fig. 24. Occurrence of such deformation of the optical gel member is not preferable, because light from LED leaks from a part of the optical gel member entered into the gap in LED side, or a gap is generated between incident surface of light guide plate and the optical gel member, being induced by the deformation entering into the gap in LED side, or the like.
When these phenomena occur, it is effective to install spacer 250 which sets up the gap between adjacent LEDs on the substrate as shown in Fig. 25 and Fig. 26. Spacer 250 has an effect that deformation of the optical gel member as shown in Fig. 24 can be avoided as well as that incorporation can be carried out easily, because the face of spacer 250 to be contacted with the optical gel member becomes on the same plane as that of light-emitting face of LED by making the thickness (height) thereof same as that of light-emitting face of LED, and the optical gel member can be pressed uniformly.
The spacer 250 is preferably composed of an insulating material because it is placed on the substrate, and more preferably it has an appropriate flexibility so that wirings and contact points are not damaged. Such material is not particularly limited, but various kinds of resin elastomers and gel materials are suitable.
In addition, by constructing spacer 250 with a material having thermal conductivity and connecting to a heat-dissipating part such as heatsink, such effects can be realized that temperature rise of LED is reduced, life of LED is extended, output of LED can be further enhanced, because heat during light emission of LED can be introduced to the heat-dissipating part through a thermally conductive spacer.
A material for spacer 250 having thermal conductivity is not particularly limited, but thermally conductive gel and thermally conductive elastomer which are filled with a filler superior in electric insulation and thermal conductivity.
By applying such a flexible thermally conductive material, when the optical gel member and the spacer are brought into contact by pressing, adhesion of a thermally conductive spacer and the whole LED becomes tighter along with deformation of the spacer, and heat from LED can be efficiently transferred.

Further, as shown in Fig. 27 and Fig. 28, by providing with a reflection layer on the face to be contacted with the optical gel member of the spacer 250, not only light from the light-emitting face of LED but also light leaking to the backside can be injected into the optical gel member, and hence further improvement of brightness can be realized.
As a method for forming the reflection layer, known technology can be applied, and a known reflection sheet (for example, a reflection sheet where fine particles are adhered or exposed on the surface of a resin film, and a reflection sheet where the surface of a resin film has been finely asperity-processed) to be used in the backlight liquid crystal display device and the like, aluminum foil superior in heat diffusion property, and the like are preferable. It should be noted that when metal is used as a material for the reflection layer, it is more preferable to be subjected to transparent insulating treatment.

In addition, as another embodiment of the optical device relevant to the present invention, for example, such a structure may be employed that LED is movable in back and forth direction to the light-emitting face as shown in Fig. 40, to make incorporation of the optical gel member of the present invention easy and reduce an effect of thermal expansion of light guide plate in use situation after the incorporation.
In particular, in the case of backlight device for a large-sized liquid crystal television, since elongation and shrinkage of light guide plate by thermal expansion becomes great due to large size of the light guide plate, prevention of strain of light guide plate and loading of stress to LED becomes necessary. When effect of elongation·shrinkage of light guide plate becomes greater in the case where the optical gel member has been placed in a gap between light-emitting face of LED and light guide plate compared with the case where there is a gap between light-emitting face of LED and light guide plate as before, these problems can be solved by employing a mechanism where LED itself can follow the elongation·shrinkage of light guide plate. As a mechanism that LED is movable, for example, the following method can be applied. That is, a substrate mounting LED or a surrounding part fixing the substrate is made movable back and forth to light-emitting face of LED, and LED follows elongation·shrinkage of light guide plate by spring force, while adhesion of the placed optical gel member is maintained.

In the case where the mechanism that light-emitting face of LED is movable is used, in the first to third incorporation methods, the incorporation becomes more easier by transferring LED side in the opposite direction to light guide plate side to broaden the gap between light guide plate and light-emitting face of LED, then arranging the optical gel member of the present invention in the sandwiching position, subsequently placing the optical gel member by returning the LED side, when the optical gel member is incorporated.

### 5. Production method for the optical gel member

The gel member of the present invention has a string-like shape. Therefore, the optical gel member of the present invention can be formed, for example, by extrusion molding of addition reaction type silicone or condensation reaction type silicone as an example for embodiment of silicone type gel, or further thermoplastic acryl type gel or olefin type gel. As the extrusion molding, known method can be used. In addition, a treatment step may be added to adjust tackiness of the surface or to make a configuration that internal part is incompletely-cured state and surface is completely-cured state by providing SiH oil on the surface of completely- or incompletely-cured optical gel member obtained by extrusion molding. Further, instead of extrusion molding, cast molding method in which uncured gel material is injected in a metal mold can be also used. This method may be modified to a method where only surface is cured, by coating a component to cure uncured gel material (for example, SiH oil in the case of silicone type gel) on the surface of the metal mold in advance. Further, a reflection layer or a diffusion layer may be formed on the surface by dispersing a reflective material or diffusing material in the curing reaction component (for example, SiH oil) to be used in these production methods.

### EXAMPLES

Hereinafter, the present invention is specifically explained by means of Examples, however, the present invention is not particularly limited to these Examples.
It should be noted that in Examples and Comparative Examples, properties relating to the optical gel member and the like were evaluated according to the following evaluation methods, and as the optical gel member, the following materials were used.

### 1. Evaluation method

### (1) Hardness:

For a transparent gel constituting the optical gel member, penetration was measured by penetration measurement method in accordance with JIS K2207 "Petroleum asphalt", or Asker C hardness in accordance with SRIS 0101 Standard, or JIS-A hardness in accordance with JIS K6253 was measured, and the measurement value was used as a hardness of the optical gel member.

### (2) Tackiness (ball No. in the tilt type ball tack test):

According to the tilt type ball tack test of JIS Z0237 "Test method for pressure-sensitive adhesive tape and pressure-sensitive adhesive sheet", ball tack value was determined by pasting a test piece on an inclined plate at 30 degrees, rolling balls on the surface of the test piece, finding out the maximum ball No. among the balls stopping within the measurement zone after 300 seconds.

### (3) Compressive repulsive force:

Using a compression testing machine (manufactured by Shimadzu Corp., Autograph AG-I 10 kN), in accordance with JIS K6250 (ISO 23529) "Rubber - General rule of physical testing method", an optical gel member was compressed in a direction to press with LED and light guide plate at a rate of 1 mm/min, and a testing force at 30% compression was measured. Compressive repulsive force was obtained by calculating testing force per unit area.

### (4) Transmittance (refractive index):

Transmittance of visible light in a wavelength region of 380 to 780 nm was measured by a method in accordance with JIS K7105 "Testing method for optical properties of plastics". As a measurement equipment, Ultraviolet and visible light spectrophotometer UbestV-550-IRM manufactured by JASCO Corp. was used.

### (5) Brightness:

As for evaluation of brightness in a incorporated state in an actual optical device, since an adequate evaluation of brightness is difficult because optimum design of light guide plate or matching with other optical components are different depending on yes or no about incorporation of the string-like gel member, a simple testing method was employed. That is, using a setup shown in Fig. 20, light was injected into the end face of an acrylic plate simulating light guide plate, and brightness of outgoing light from the end face in the opposite side was measured by a luminance meter. Based on the brightness of the case where the string-like gel member is absent in a gap between LED and light guide plate (Comparative Example 1) being standard 1, a ratio of brightness in the case where the gap is sealed with a gel material was evaluated.
As the acrylic plate, a sheet formed in 40 mm × 55 mm × thickness 1 mm using GH-S produced by Kuraray Co., Ltd. as a raw material was used. Further, as the LED light-emitting unit of light source, a LED light-emitting unit (4 pieces of LEDs (light-emitting face: 3 mm × 0.5 mm) had been arranged at 6 mm intervals) mounted on a flexible substrate of backlight device (BLD 2265W) supplied from Internix Inc. was used, and arranged in the short side of the acrylic plate.
It should be noted that the faces other than the light incident surface and the light outgoing face of the acrylic plate were shielded by pasting a reflection film (not shown in Figs.) to avoid light leakage. In addition, a reflection film (not shown in Figs.) was similarly arranged in a gap between LED and acrylic plate or a part where the string-like gel was sandwiched. As a luminance meter, CS-2000 manufactured by Konica Minolta Sensing, Inc. was used, and brightness was measured by integral system for visible light region of wavelength 380 to 780 nm.

It should be noted that, in Examples 19 to 27 and Comparative Example7, as shown in Fig. 31, on a light outgoing face of an acrylic plate, a diffusing plate and a light shielding plate having an opening section of 48 mm × 10 mm in such a position that the light outgoing face of the acrylic plate located in the center were laminated in this order, and brightness of the opening section was measured using CS-2000 manufactured by Konica Minolta Sensing, Inc. by integration system for visible light region of wavelength 380 to 780 nm.
As the LED light-emitting unit of a light source, a LED light-emitting unit (3 pieces of LEDs (light-emitting face: 3 mm × 2 mm had been arranged at 11 mm intervals in the longitudinal direction of the light-emitting face of LED) mounted on a flexible substrate of a commercially available backlight device (NP-00014 manufactured by Shibasaki Inc.) was used, and arranged in the long side of the acrylic plate (10 mm × 40 mm × thickness 4 mm).
In the brightness evaluation in Examples 19 to 27, a ratio of brightness was evaluated based on the brightness of Comparative Example 7 (a case where the string-like gel member is absent in a gap between LED and light guide plate) being standard 1.

### (6) Existence or non-existence of interface air bubble:

Existence or non-existence of air bubble was visually confirmed when the string-like gel member was brought into contact.

### (7) Oil bleeding property:

Evaluation of oil bleeding property was carried out by heating the string-like gel member in a compressed state with light-emitting face of LED and incident surface of light guide plate in an oven at a temperature of 70°C, and an oil bleeding state after 100 hours was observed. By visual check, a case where bled oil was observed was scored as "×" (insuffcient), contrary, a case where bled oil was not observed was scored as "○" (good).

### (8) Rework aptitude:

When a incorporated assembly was dismantled, a case where the string-like gel member could be peeled off without gel breaking in both sides of LED and light guide plate was scored as "⊚" (excellent), a case where the string-like gel member was broken and the broken gel remained in at least one of LED and light guide plate was scored as "○" (good), and a case where the string-like gel member could not be peeled off from at least one of LED and light guide plate or the surface of light guide plate was damaged was scored as "×" (insufficient).

### (9) Problem after incorporation:

By visual observation, a case where a problem was found was scored as "Yes", in contrary, a case where no problem was found was scored as "No".

### 2. Materials used

### (1) Linear type silicone gel (Material A):

### Material A1:

As uncured liquid silicone gel raw material, a two-component addition reaction type silicone gel produced by Wacker Asahikasei Silicone Co., Ltd. (model: SLJ 3363, total light transmission rate in air: 90%) where liquid A (main agent + cross-linking catalyst) / liquid B (main agent + cross-linking agent) was blended in a ratio of 55 parts by weight / 45 parts by weight was used. The silicone gel raw material was cured by heating at 75°C for 1 hour in a hot air type oven, after that cooled down naturally at room temperature (25°C) to obtain a silicone gel.

### Material A 2:

A two-component addition type silicone gel produced by Wacker Asahikasei Silicone Co., Ltd. (model: RT-601) where main agent and curing agent were blended in a ratio of 100 : 3 (by weight) was used, and cured in the same way as in the material A1 to obtain a silicone gel.

### Material A 3:

A two-component addition type silicone produced by Momentive Performance Materials Inc. (model: LSR 7070) was cured under the same curing conditions as in the material A1 to obtain a silicone gel.

### (2) Branched type silicone gel (Material B):

### (i) Preparation of branched type organopolysiloxane (branched type polyvinyl siloxane having molecular weight of 60,000 and number of branch of 3):

Into a 3 L four-necked flask equipped with a water-fractionating column having a condenser, a thermometer, and a stirrer, octamethylcyclotetrasiloxane (1477 g), methyltriethoxysilane (13.3 g), 1,1,3,3-tetramethyl-1,3-divinylsiloxane (11.6 g), 50% by weight potassium hydroxide aqueous solution (9.2 g), and toluene (169 g) were poured. The water-fractionating column was separately filled with toluene (30 mL), and then heating and stirring was started. Azeotropic dehydration was carried out at a temperature of the reaction liquid of 130 to 140°C, and after flowing out of water stopped, the reaction liquid was refluxed under stirring for further 2 hours to carry out equilibrium polymerization reaction.
The reaction was terminated at the time point when a sampling liquid showed no variation in molecular weight distribution in polystyrene equivalent gel permeation chromatography (GPC). After the reaction liquid was cooled down to 50°C, alkaline catalyst was neutralized by adding acetic acid (5.8 g) and stirring for 30 minutes. The salt was hydrolyzed, the procedure of adding water (500 g) and stirring for 5 minutes, standing, and liquid separation was repeated 3 times, to confirm that pH of the aqueous layer was neutral. Toluene was distilled off from the organic layer by distilling under the conditions of 50 to 130°C / 2.6 to 5.2 kPa, subsequently low molecular weight siloxane was distilled off under the conditions of 130 to 200°C / 0.7 to 2.2 kPa, to obtain the desired polyorganosiloxane (1277 g). Structural formula thereof is shown below.
Yield thereof was 82%, viscosity (25°C) was 899 mPa·s, weight average molecular weight was 44000, and content of vinyl group was 0.33% (theoretical value: 0.23%).

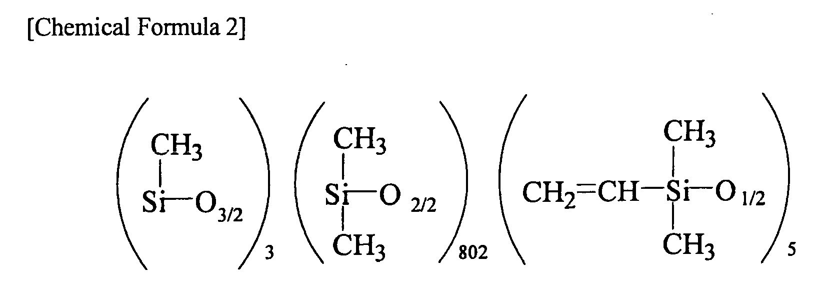

### (ii) Preparation of composition and cured silicone gel:

The branched type polyorganosiloxane prepared above (104 g), polyhydrogensiloxane (produced by Shin-Etsu Chemical Co., Ltd., "KF-99" (hydrogen content: 3.1%)) (0.84 g), and platinum catalyst (produced by N. E. Chemcat Corp., "Pt-VTS" 1% by weight solution) (0.2 g) were mixed for 10 minutes by a hand mixer, and the mixture was degassed under the conditions of 25°C / 1 kPa for 10 minutes. The mixture was injected into a predetermined metal mold, and cured by heating at 70°C / 1 hour, then 100°C / 3 hours in an oven, to obtain a cured silicone (700 g). Hardness (penetration) thereof was 100.

### (3) Acrylic gel (Material C):

"Navstar" produced by Kaneka Corp. was used.

### (4) Olefin type gel (Material D):

A commercially available polyethylene-based gel (supplied by Tokyu Hands Inc., trade name: "Super gel") having a hardness in cured state of Asker C 15 was used.

### (5) High viscosity silicone oil (Material E):

A high viscosity dimethyl silicone oil KF-96H produced by Shin-Etsu Chemical Co., Ltd. (dynamic viscosity: 300,000 mm²/s) was used.

### (6) Optical adhesive (Material F):

An ultraviolet cure optical adhesive "NOA 68" produced by Norland Products Inc. was used. A light-emitting face of LED and a light guide plate was connected via said optical adhesive layer (about 1 mm), which was cured by irradiating UV-ray in a wavelength region of 350 to 380 nm.

### [Example 1]

As a transparent gel for optical gel member having hardness in cured state of 60 in penetration, an uncured raw material of linear type silicone gel (material A1) was filled into a metal mold, cured by heating at 80°C, to prepare a cylindrical string-like gel member having ϕ = about 1.5 mm.
The thus prepared string-like gel member was brought into contact with the side face in incidence side of an acrylic plate simulating light guide plate, and further light-emitting face of LED was laminated in such way that the light-emitting face of LED was opposed to the incident surface of acrylic plate, so that the light-emitting face of LED is in contact with the string-like gel member, as the configuration shown in Fig. 20. The string-like gel member was compressed (compression rate: 30%) so that a distance between the incident surface of acrylic plate and the light-emitting face of LED became 1 mm, and further LED and light guide plate were fixed using a jig (not shown in Fig. 20), to obtain test sample 1.

### [Example 2]

Test sample 2 was obtained in the same way as in Example 1, except that a nearly rectangular parallelepiped string-like gel member having a cross-sectional area of 1.5 mm□ (square) was used, and shape of the light-emitting face of LED was modified to convexly curved surface (height from the original light-emitting face to the top of convexly curved surface: 250 µm) by coating a transparent liquid epoxy resin (produced by Henkel Japan Ltd., Stycast 1264) and then curing at 40°C.

### [Example 3]

Test sample 3 was obtained in the same way as in Example 1, except that material A2 having a gel hardness of Asker C 30 in cured state was used as a transparent gel of optical gel member.

### [Example 4]

Test sample 4 was obtained in the same way as in Example 1, except that a string-like gel member having hardness in LED side and light guide plate side of 100 and 60 in penetration, respectively, was obtained by using raw materials having hardness of 60 and 100 in penetration in cured state obtained by adjusting the blend ratio of silicone gel raw materials used in Example 1, and molding these raw materials in nearly semi-cylindrical which was divided in two parts to the LED-contacting side and the light guide plate side, and curing the raw materials.

### [Examples 5 to 7]

Test samples 5 to 7 were obtained in the same way as in Example 1, except that raw materials giving string-like gel members having tackiness of ball No. 20 and ball No. 5 in the tilt type ball tack test (tilt angle: 30 degrees) in accordance with JIS Z0237, respectively, by adjusting the blend ratio of silicone gel raw materials used in Example 1, were used.

### [Example 8]

Test sample 8 was obtained in the same way as in Example 1, except that a string-like gel member having tackiness in LED side and light guide plate side of ball No. 20 and ball No. 5 in the tilt type ball tack test (tilt angle: 30 degrees) in accordance with JIS Z0237, respectively, was obtained by using raw materials used in Examples 5 and 7, and molding these raw materials in nearly semi-cylindrical which was divided in two parts to the LED-contacting side and the light guide plate side, and curing the raw materials.

### [Example 9]

Test sample 9 was obtained in the same way as in Example 1, except that a diameter (ϕ) of the string-like gel member was made nearly 2 mm, and the string-like gel member was compressed with LED and light guide plate at compression rate of 50%.

### [Example 10]

Test sample 10 was obtained in the same way as in Example 1, except that the above-described branched type silicone gel (material B) was used as a raw material.

### [Example 11]

Test sample 11 was obtained in the same way as in Example 1, except that an acryl type gel (material C) was used as a raw material.

### [Example 12]

Test sample 12 was obtained in the same way as in Example 1, except that both end faces of the string-like gel member were made in a obscure glass-like surface state, by molding using a metal mold where the surfaces of the mold corresponding to the both end faces of the string-like gel member were subjected to surface roughening to have surface roughness (Ra) of 10 µm. It should be noted that light transmission rate of the obscure glass-likely surface treated face was 70% based on the light transmission rate of untreated face.

### [Example 13]

Test sample 13 was obtained in the same way as in Example 12, except that using a metal mold where the surfaces of the mold other than the part contacting with light-emitting face of LED and incident surface of light guide plate were subjected to surface roughening so as to have surface roughness (Ra) of 10 µm, the faces other than the part contacting with light-emitting face of LED and incident surface of light guide plate were made in a obscure glass-like surface state.

### [Example 14]

Test sample 14 was obtained in the same way as in Example 12, except that the string-like gel member was attached around the peripheral surfaces in 3 sides of an acrylic plate simulating light guide plate, and light-emitting devices of LED were adhered and laminated in the 3 sides under the conditions shown in Table 3, as shown in Fig. 15 (c). It should be noted that mounting of the light-emitting device of LED in the long side of the acrylic plate was carried out at the nearly center point of the long side. In addition, evaluation of brightness was done by comparing with the brightness being 1 in the case where the string-like gel member of this Example 14 was absent and distance between incident surface of the acrylic plate and the light-emitting face of LED was 1 mm.

### [Example 15]

Test sample 15 was obtained by using a semi-cylindrical string-like gel member (diameter: 1 mm) which was formed together with incident surface of acrylic plate by injection molding and curing, instead of the string-like gel member and the acrylic plate in Example 1.

### [Example 16]

By filling uncured raw material of linear type silicone gel in a metal mold on the surface of a reflection sheet (produced by Tsujiden Co., Ltd.), and curing by heating at 50°C, an optical component was obtained where a string-like gel member having a circular cross-sectional shape having a diameter (ϕ) of 1.5 mm with flattened top and bottom in parallel at the same distance from the center as shown in Fig. 30 (b) and the reflection sheet were integrated. Test sample 16 was obtained by assembling up using this optical component according to the method shown in Fig. 16.
It should be noted that each dimension in Fig. 30 (b) is: A = 1 mm, B = 1.5 mm, C = 1 mm, and D = 0.25 mm, and shapes of the faces abutting with light guide plate and light-emitting face of LED were curved surfaces consisting of ellipsoidal arc having long axis of 1 mm, short axis of 0.5 mm, and centers at points P and Q, respectively.

### [Example 17]

Test sample 17 was obtained using a string-like gel member having a shape shown in Fig. 16 where a release film (an alkyd resin type release film produced by Panac Corp. (model: T-9, film thickness: 0.1 mm)) had been laminated on one side thereof, and assembling up according to the method shown in Fig. 18.

### [Example 18]

Test sample 18 was obtained by fixing light-emitting face of LED and incident surface of light guide plate in a light-emitting unit using a jig to form a gap so that the gap was maintained at 1 mm, and pushing the string-like gel member of Example 16 into the gap with a slim rod coated with Teflon (registered trademark).

### [Example 19]

As an optical gel member, a string-like gel member was prepared by extruding an olefin type gel (material D) which was chopped into small pieces in a cross-sectional shape shown in Fig. 30 (b).
It should be noted that dimensions of the cross-sectional shape in Fig. 30 (b) is: A = 4 mm, B = 2 mm, C = 1 mm, and D = 0.5 mm, and shapes of the faces abutting with light guide plate and light-emitting face of LED were curved surfaces consisting of ellipsoidal arc having long axis of 4 mm, short axis of 1 mm, and a center at point P.
Test sample 19 was obtained by bringing the thus prepared string-like gel member into contact with side face in the incidence side o acrylic plate simulating light guide plate so as to become the configuration shown in Fig. 30, (c) and (d), further laminating light-emitting face of LED so as to contact with the string-like gel member and oppose to incident surface of the acrylic plate, compressing the string-like gel member so that incident surface of acrylic plate and light-emitting face of LED became 1 mm (compression rate: 30%), and further fixing LED and light guide plate with a jig (not shown in Fig. 30).

### [Example 20]

Test sample 20 was obtained in the same way as in Example 19, except that the silicone gel used in Example 1 was used, as an optical gel member.

### [Example 21]

Test sample 21 was obtained in the same way as in Example 19, except that a silicone gel composed of material A3, which was blended so that hardness in cured state became 80 in JIS-A hardness, was used.

### [Example 22]

Test sample 22 was obtained by using a gel member formed by extrusion having a cross-sectional shape shown in Fig. 35 (c) as a string-like gel member, compressing the gel member so that a distance between incident surface of acrylic plate and light-emitting face of LED became 1 mm (compression rate: 30%) according to the procedures of Fig. 36, (a) to (c), further fixing LED and light guide plate with a jig (not shown in Fig. 36) in Example 19.
It should be noted that each dimension in Fig. 35 (c) is: A = 6 mm, B = 2 mm, C = 1 mm, and D = 0.5 mm, E = 4 mm, G = 1 mm, and shape of the face abutting with light guide plate (projection part side) was curved surface consisting of ellipsoidal arc having long axis of 4 mm, short axis of 1 mm, and center at point P, and shape of the face abutting with light-emitting face of LED was curved surface consisting of ellipsoidal arc having long axis of 6 mm, short axis of 1 mm, and center at point Q.

### [Example 23]

Test sample 23 was obtained by using a gel member formed by extrusion having a cross-sectional shape shown in Fig. 38 (c) as a string-like gel member, compressing the gel member so that a distance between incident surface of acrylic plate and light-emitting face of LED became 1 mm (compression rate: 30%) according to the procedures of Fig. 36, (a) to (c) as shown in Fig. 39 (a), further fixing LED and light guide plate with a jig (not shown in Fig. 39 (a)) in Example 22.
It should be noted that each dimension in Fig. 38 (c) is: A = 5 mm, B = 2 mm, C = 1 mm, and D = 0.5 mm, E = 4 mm, F = 1 mm, and shapes of the faces abutting with light guide plate and light-emitting face of LED were curved surfaces consisting of ellipsoidal arc having long axis of 4 mm, short axis of 1 mm, and centers at points P and Q, respectively.

### [Example 24]

Test sample 24 was obtained in the same way as in Example 19, except that a spacer which was prepared by providing holes corresponding to the shape and locations of LED in a heat conductive gel sheet (produced by Taica Corp., COH 4000LVC) having the same thickness as that in the direction of light-emitting face of LED was mounted in the LED section as shown in Fig. 26.

### [Example 25]

Test sample 25 was obtained in the same way as in Example 24, except that a spacer having such a structure that a graphite sheet (produced by Taica Corp., Super λGS, thickness: 50 µm) and a reflection sheet (topmost surface side) had been laminated on the surface of the spacer in the side contacting with the string-like gel member so that light-emitting face of LED was exposed, was used.

### [Example 26]

Test sample 26 was obtained in the same way as in Example 19, except that a silicone oil was interposed between light-emitting face of LED and string-like gel member in such an amount that dripping did not occur by incorporating the string-like gel member after coating silicone oil (produced by Dow Corning Toray Co., Ltd., SH-200) on the light-emitting face of LED.

### [Example 27]

Test sample 27 was obtained in the same way as in Example 19, except that an aqueous solution of ethylene-vinyl alcohol copolymer (produced by Nippon Synthetic Chemical Industry Co., Ltd., Soanol D2908) containing polyurethane beads (produced by Negami Chemical Industrial Co., Ltd., Art-pearl C-400, average particle size: 15 µm) in 85% by dry weight was coated on the surface layer of the string-like gel member in the side contacting with light-emitting face of LED, dried at 110°C for 3 minutes, to form a diffusion layer having a thickness of 15 µm.

### [Comparative Example 1]

Comparative sample 1 was obtained in the same way as in Example 1, except that an optical device was assembled up while a distance between incident surface of acrylic plate and light-emitting face of LED was kept at 1 mm, without using the string-like gel member.

### [Comparative Examples 2 and 3]

Comparative samples 2 and 3 were obtained in the same way as in Example 1, except that the above-described high viscosity silicone oil (material E) and an optical adhesive (material F) were used instead of the string-like gel member, respectively.

### [Comparative Examples 4 and 5]

Comparative samples 4 and 5 were obtained in the same way as in Example 1, except that raw materials which showed hardness after curing of 250 in penetration and 90 in JIS-A hardness, respectively, by varying blend ratio of silicone gels (materials A1 and A3).

### [Comparative Example 6]

Comparative sample 6 was obtained in the same way as in Example 1, except that a compressive repulsive force after curing was set at 13 MPa by varying blend ratio of material A3 as a silicone gel material.

### [Comparative Example 7]

Comparative sample 7 was obtained in the same way as in Comparative Example 1, except that the brightness measurement method as shown in Fig. 31.

Evaluation results for Examples 1 to 9, Examples 10 to 18, and Examples 19 to 27 are shown in Table1, Table 2, and Table 3, respectively. Also, evaluation results of Comparative Examples 1 to 7 are shown in Table 4.
It should be noted that symbols of cross-sectional shape in tables are as follows: C: circular, S: square, Ov: ellipsoidal with flat top and bottom, U: U-shaped, and L: L-shaped.

**[Table 1]**

| | | | Example 1 | Example 2 | Example 3 | Example 4 | Example 5 | Example 6 | Example 7 | Example 8 | Example 9 |
|---|---|---|---|---|---|---|---|---|---|---|---|
| | Material | | A1 | A1 | A2 | A1 | A1 | A1 | A1 | A1 | A1 |
| | Hardness | Penetration | 60 | 60 | - | 60/100 | 60 | 60 | 60 | 60 | 60 |
| Gel | | Asker-C | - | - | 30 | - | - | - | - | - | - |
| | | JIS A | - | - | - | - | - | - | - | - | - |
| | Cross-sectional shape | | C | S | C | C | C | C | C | C | C |
| | 30% Compressive repulsive force [MPa] | | 0.3 | 0.3 | 3 | 0.3 | 0.3 | 0.3 | 0.3 | 0.3 | 0.3 |
| String-like | Tackiness ball tack No. | | 20 | 20 | 20 | 20 | 5 | 32 | 1 | 10/32 | 20 |
| gel member | Low light transmission rate treatment | | No | No | No | No | No | No | No | No | No |
| | Compression rate in assembling (%) | | 30 | 30 | 30 | 30 | 30 | 30 | 30 | 30 | 50 |
| | Brightness | | 1.15 | 1.1 | 1.15 | 1.15 | 1.15 | 1.15 | 1.15 | 1.15 | 1.15 |
| | Interface air bubble | | No | No | No | No | No | No | No | No | No |
| Evaluation | Oil bleeding | | ○ | ○ | ○ | ○ | ○ | ○ | ○ | ○ | ○ |
| results | Rework aptitude | | ○ | ○ | ○ | ○ | ○ | ○ | ○ | ○ | ○ |
| | Problem after incorporation | | No | No | No | No | No | No | No | No | No |

**[Table 2]**

| | | | Example 10 | Example 11 | Example 12 | Example 13 | Example 14 | Example 15 | Example 16 | Example 17 | Example 18 |
|---|---|---|---|---|---|---|---|---|---|---|---|
| | Material | | B | C | A2 | A1 | A1 | A1 | A1 | A1 | A1 |
| Gel | Hardness | Penetration | 60 | 60 | 60 | 60 | 60 | 60 | 60 | 60 | 60 |
| | | Asker-C | - | - | - | - | - | - | - | - | - |
| | | JIS A | - | - | - | - | - | - | - | - | - |
| | Cross-sectional shape | | C | C | C | C | C | C | Ov | Ov | Ov |
| | 30% Compressive repulsive force [MPa] | | 0.3 | 0.3 | 0.3 | 0.3 | 0.3 | 0.3 | 0.3 | 0.3 | 0.3 |
| String-like | Tackiness ball tack No. | | 20 | 20 | 20 | 20 | 20 | 20 | 20 | 20 | 20 |
| gel | Low light transmission rate treatment | | No | No | Yes | Yes | No | No | No | No | No |
| member | | | | | both end faces | end face + peripheral surface | | | | | |
| | Compression rate in assembling (%) | | 30 | 30 | 30 | 30 | 30 | 30 | 30 | 30 | 50 |
| | Brightness | | 1.15 | 1.15 | 1.16 | 1.17 | 1.15 | 1.15 | 1.15 | 1.15 | 1.15 |
| | Interface air bubble | | No | No | No | No | No | No | No | No | No |
| Evaluation results | Oil bleeding | | ○ | ○ | ○ | ○ | ○ | ○ | ○ | ○ | ○ |
| | Rework aptitude | | ○ | ○ | ○ | ○ | ○ | ○ | ○ | ○ | ○ |
| | Problem after incorporation | | No | No | No | No | No | No | No | No | No |

**[Table 3]**

| | | | Example 19 | Example 20 | Example 21 | Example 22 | Example 23 | Example 24 | Example 25 | Example 26 | Example 27 |
|---|---|---|---|---|---|---|---|---|---|---|---|
| | Material | | D | A1 | A3 | D | D | D | D | D | D |
| Gel | Hardness | Penetration | - | 60 | - | - | - | - | - | - | - |
| | | Asker-C | 15 | - | - | 15 | 15 | 15 | 15 | 15 | 15 |
| | | JIS A | - | - | 80 | - | - | - | - | - | - |
| | Cross-sectional shape | | Ov | Ov | Ov | U | L | Ov | Ov | Ov | Ov |
| | 30% Compressive repulsive force [MPa] | | 0.3 | 0.3 | 11 | 0.3 | 0.3 | 0.3 | 0.3 | 0.3 | 0.3 |
| String-like gel | Tackiness ball tack No. | | 5 | 20 | 1 | 5 | 5 | 5 | 5 | 5 | 5 |
| member | Low light transmission rate treatment | | No | No | No | No | No | No | No | No | No |
| | Compression rate in assembling (%) | | 30 | 30 | 30 | 30 | 30 | 30 | 30 | 31 | 30 |
| | Brightness | | 1.15 | 1.15 | 1.15 | 1.15 | 1.15 | 1.15 | 1.16 | 1.17 | 1.13 |
| | Interface air bubble | | No | No | No | No | No | No | No | No | No |
| Evaluation results | Oil bleeding | | ○ | ○ | ○ | ○ | ○ | ○ | ○ | ○ | ○ |
| | Rework aptitude | | ○ | ○ | ○ | ○ | ○ | ○ | ○ | ○ | ○ |
| | Problem after incorporation | | No | No | No | No | No | No | No | No | No |

**[Table 4]**

| | | | Comparative Example 1 | Comparative Example 2 | Comparative Example 3 | Comparative Example 4 | Comparative Example 5 | Comparative Example 6 | Comparative Example 7 |
|---|---|---|---|---|---|---|---|---|---|
| | Material | | | | | A1 | A3 | A3 | |
| | Hardness | Penetration | | | | 250 | - | - | |
| Gel | | Asker-C | | E | F | - | - | - | |
| | | JIS A | | | | - | 90 | 100 | |
| | Cross-sectional shape | | No | | | C | C | C | No |
| | 30% Compressive repulsive force [MPa] | | | - | - | 0.01 | 15 | 13 | |
| String-like gel member | Tackiness ball tack No. | | | | | 20 | 1 | 1 | |
| | Low light transmission rate treatment | | | | | No | No | No | |
| | Compression rate in assembling (%) | | - | 30 | 30 | 30 | 30 | 30 | - |
| | Brightness | | 1 | 1.05 | 1.1 | 1.15 | - | 1.15 | 1 |
| | Interface air bubble | | - | Yes | No | Yes | No | No | - |
| Evaluation | Oil bleeding | | - | - | ○ | × | ○ | ○ | - |
| results | Rework aptitude | | - | × | × | ○ | ○ | ○ | - |
| | Problem after incorporation | | - | Oil contamination | No | No | LED device breakage | LED substrate deformation | - |

As obvious from the evaluation results shown in Tables 1 to 4, it can be understood that by interposing a string-like gel member between light guide plate and LED of an optical device as the optical gel member of the present invention, the evaluation result of brightness is improved by as much as 15%, for example, compared to the case having a gap as in Comparative Example 1. Similarly, other evaluation results are superior.
In addition, as a string-like gel member, not only silicone type but also acryl type and polyolefin type give the similar effects. Further, as for cross-sectional shape of the string, not only circular shape, even the shapes in Examples 19 to 27 also give the similar effects. In particular, the string-like gel members having the cross-sectional shapes in Examples 19 to 27 could be easily inserted into the gap between LED and light guide plate, and when the string-like gel members were placed between LED and light guide plate, since the string-like gel members could be easily deformed by pressing and closely adhered to light-emitting face of LED and incident surface of light guide plate, assembling was simple and easy.
Furthermore, by modifying cross-sectional shape of the string-like gel member to U-shaped or L-shaped by providing the projection part as in Examples 22 and 23, the string-like gel member hardly became out of alignment in incorporation, and incorporation work became further simpler and easier.

By incorporating a spacer in the surrounding area of LED as in Examples 24 and 25, when the string-like gel member is incorporated, the string-like gel member is uniformly compressed by the spacer, floating of the string-like gel member in the contacting part with light guide plate (or light-emitting face of LED) became hardly to occur, and incorporation became more simpler and easier.
In addition, although not described in Tables 1 to 3, using a heat dissipation structure where an aluminum plate having a thickness of 1 mm is contacted with the end surface of the spacer (outmost surface nearer to the end than LED) in Examples 24 and 25, and cooling the aluminum plate is air-cooled by a fun motor, heat generation state of the LED unit section after 10 hours of LED lighting was observed by measuring side face temperature of light-emitting face of LED in the central part of the light-emitting unit with a thermocouple, and found that the temperature was lowered by 1°C in Example 24, and 1.5°C in Example 25 compared to the case of Example 19. Thus, heat dissipation effect of LED was obtained.
Further, in Example 25, since the spacer had a reflection layer on the surface thereof in Example 25, and leaked light to light-emitting face side of LED (including returning light from the string-like gel member and the like) was reflected and injected into the string-like gel member, brightness was improved though slightly.
In addition, in Example 26, even in an extremely small gap in the contacting interface between light-emitting face of LED and the string-like gel member, since oil was interposed and air bubble was eliminated, brightness was improved compared to Example 19.
Further, in Example 27, by providing a diffusing layer on the face of the string-like gel member in the contacting side to light-emitting face of LED, a more uniform brightness distribution compared to Example 19 was obtained.

### INDUSTRIAL APPLICABILITY

The optical gel member of the present invention can be used for display device such as cell-phone, liquid crystal monitor and liquid crystal television; illuminated advertising display such as interior or exterior sign and advertisement, and for display; lighting equipment; optical components for vehicle such as tail lamp and in-car lighting; and the like.

### REFERENCE SIGNS LIST

1 Light guide plate
10 Acrylic plate simulating light guide plate
12 Light incident surface of light guide plate
2 Light-emitting unit
20 LED (light-emitting diode)
21 Electronic substrate
22 LED movable mechanism section (fixed)
23 LED movable mechanism section (movable)
201 LED light-emitting face
202 Encapsulant
203 LED device
3, 31, 32, 33, 34, 35, 36, 37, 38, 39 Optical gel member (string-like gel member)
4 Gap
5 Reflection sheet
60, 61, 62 Integrated product of light guide plate and optical gel member
70, 71, 72 Integrated product of reflection sheet and optical gel member
80, 81 Laminated part of release film and optical gel member
90, 91 Release film
100, 101, 102 Optical gel member subjected partially to low light transmission treatment
501 Low light transmission treated face (surface roughening-treated face)
502 Low light transmission treated face (reflective material)
505 High light transmission face (LED contacting face)
506 High light transmission face (light guide plate contacting face)
310, 320, 330, 360 Optical gel member composed of materials having different hardness
311, 321, 331 High hardness gel part
312, 322, 332 Low hardness gel part
340, 350 Optical gel member composed of faces having different tackiness
341, 351 Low tackiness gel part
342, 352 High tackiness gel part
370, 371 Optical gel member having U-shaped cross-sectional shape
372, 373 Optical gel member having L-shaped cross-sectional shape
370a, 370b, 372a Projection part
380 Light diffusing agent
381 Site added with light diffusing agent
390 Transparent fluid
391 Transparent gel material
400 Light diffusing sheet
410,411,412 Light condensing sheet
250 Spacer
251 Reflection layer
45 Transparent liquid (b)
L Light-emitting direction
T Brightness meter
M Brightness distribution measurement site
S Light shielding plate
R Pressing tool
F Fan
TC Thermocouple
H Heat sink

## Claims

1. An optical gel member to be used in an interposed state between light guide plate and light-emitting device consisting of a light-emitting diode (LED) in an optical device, **characterized by** satisfying the following requirements (i) to (iii).
(i) The optical gel member consists of at least one kind transparent gel selected from silicone type gel, acryl type gel, polyolefin type gel, polyurethane type gel, butadiene gel, isoprene gel, butyl gel, styrene-butadiene gel, ethylene-vinyl acetate copolymer gel, ethylene-propylene-diene ternary copolymer gel and fluorine gel, which has a hardness of 0 to 80 in JIS-A hardness in accordance with JIS K6253, or 20 to 200 in penetration (25°C) in accordance with JIS K2207;
(ii) The optical gel member is in a string-like form, and the peripheral surface string-like gel member is in contact with light guide plate and light-emitting device;
(iii) The optical gel member has a repulsive force of 12 MPa or less at a compression rate of 30%.

2. The optical gel member according to claim 1, **characterized in that** at least one of faces in contact with light guide plate and light-emitting device of the peripheral surface of the string-like gel member has been set to have a convexly curved surface before the contact, and the convexly curved surface is compressed in a gap between light guide plate and light-emitting device to deform along with the surface form of a light incident surface of the light guide plate and/or a light-emitting face of the light-emitting device with no gap after the contact.

3. The optical gel member according to claim 1, **characterized in that** cross-sectional shape of the string-like gel member is an ellipsoidal shape with flattened top and bottom.

4. The optical gel member according to claim 1, **characterized in that** cross-sectional shape of at least a part of the string-like gel member is U-shaped or L-shaped.

5. The optical gel member according to claim 1, **characterized by** having a tackiness of ball No. 5 to 32 in the tilt type ball tack test (tilt angle: 30 degrees) in accordance with JIS Z0237.

6. The optical gel member according to claim 1, **characterized in that**, as for the hardness, the hardness in the light-emitting device side of the gel member is softer than that of the light guide plate side.

7. The optical gel member according to claim 1, **characterized in that** a diffusing agent has been dispersed at least in a part of the surface layer and/or the internal part of the optical gel member.

8. The optical gel member according to claim 1, **characterized in that** the string-like gel member has a different light transmittance in the peripheral surface and in the end face, and an light transmittance in the end face is 90% or less relative to that in the peripheral surface.

9. The optical gel member according to claim 1, **characterized in that** the transparent gel is a silicone gel, and said silicone gel is a branched type silicone gel obtained by heat-curing a composition containing (A) branched type organopolysiloxane, (B) organohydrogenpolysiloxane and (C) addition reaction catalyst.

10. The optical gel member according to claim 1, **characterized in that** the transparent gel is a polyolefin type gel, and said polyolefin type gel has a tensile elongation rate (in accordance with JIS K6251) of 50% or more.

11. The optical gel member according to claim 1, **characterized in that** a transparent liquid (a) has been coated on the surface of the transparent gel.

12. The optical gel member according to claim 1, **characterized in that** the optical device is a liquid crystal display device or a lighting equipment.

13. An optical component having a constitution where the optical gel member according to any one of claims 1 to 12 has been adhered tightly at a predetermined position of light guide plate or reflection sheet in advance.

14. A laminated product of the optical gel member obtained by laminating at least a part of the peripheral surface of the optical gel member according to any one of claims 1 to 12 at a predetermined position of a release film in a peelable state in advance.

15. An assembling method for an optical device, **characterized by** pinching the optical gel member according to any one of claims 1 to 12 with light guide plate of an optical device and light-emitting device consisting of a light-emitting diode (LED) to fix said optical gel member by compression.

16. An assembling method for an optical device, **characterized by** pinching the laminated product of the optical gel member according to claim 14 with light guide plate of an optical device and light-emitting device consisting of a light-emitting diode (LED) to fix said laminated product, subsequently peeling off the release film from the optical gel member.

17. An assembling method for an optical device, **characterized by** pushing-in and inserting the optical gel member according to any one of claims 1 to 12 into a gap between light incident surface of light guide plate and light-emitting face of light-emitting device consisting of a light-emitting diode (LED) in an optical device which has been assembled up already, to connect said light incident surface of light guide plate and said light-emitting face of said light-emitting device through the optical gel member.

18. An assembling method for an optical device, **characterized by** inserting the optical gel member according to any one of claims 1 to 12 into a gap between light incident surface of light guide plate and light-emitting face of light-emitting device consisting of a light-emitting diode (LED) in an optical device which has been assembled up already in a state where diameter of the string-like gel member has been made finer by stretching said optical gel member in the longitudinal direction in advance, subsequently releasing the stretching of said optical gel member and restoring the original shape, to connect said light incident surface of light guide plate and said light-emitting face of light-emitting device through the optical gel member.

19. A method for producing the optical gel member according to any one of claims 1 to 12, **characterized in that** a raw material of the optical gel member is subjected to extrusion molding.

20. An optical device, **characterized by** using the optical gel member according to any one of claims 1 to 12.

21. The optical device according to claim 20, **characterized in that**:
the optical gel member according to any one of claims 1 to 12 is interposed between light incident surface of light guide plate and light-emitting face of light-emitting device consisting of a light-emitting diode (LED) in an optical device; and further
transparent liquid (b) is interposed between the optical gel member and light-emitting device consisting of a light-emitting diode (LED).

22. The optical device according to claim 20, **characterized in that**:
the optical gel member according to any one of claims 1 to 12 is interposed between light incident surface of light guide plate and light-emitting face of light-emitting device consisting of a light-emitting diode (LED) in an optical device; and further
an insulating spacer is arranged in a gap between light-emitting devices consisting of a light-emitting diode (LED).

23. The optical device according to claim 22, **characterized in that** reflection layer is provided in the optical gel member side of said spacer.

24. The optical device according to claim 22, **characterized in that** the spacer is a thermally-conductive material.

25. The optical device according to claim 20, **characterized in that** the light-emitting diode (LED) has a structure movable in a backward and forward direction perpendicular to a light-emitting face.

26. An electronic device, **characterized by** mounting the optical device according to any one of claims 20 to 25.
